# EUROPÄISCHE PATENTSCHRIFT

(11) **EP 0 587 662 B1**
(45) Veröffentlichungstag und Bekanntmachung des Hinweises auf die Patenterteilung: **04.09.1996**
(21) Anmeldenummer: 92911433.8
(22) Anmeldetag: 04.06.1992
(51) Int. Cl.: C08L 83/04, C08K 5/54

(54) **UNTER ABSPALTUNG VON ALKOHOLEN ZU ELASTOMEREN VERNETZBARE ORGANO(POLY)SILOXANMASSEN**
ORGANO(POLY)SILOXANE COMPOSITIONS WHICH CAN BE CROSS-LINKED TO FORM ELASTOMERS WITH SEPARATION OF ALCOHOLS
MELANGES D'ORGANO(POLY)SILOXANES POUVANT ETRE RETICULES EN ELASTOMERES AVEC ELIMINATION D'ALCOOLS

(30) Priorität: 06.06.1991 DE 4118598
(43) Veröffentlichungstag der Anmeldung: 23.03.1994
(73) Patentinhaber: WACKER-CHEMIE GMBH, D-81737 München (DE)
(72) Erfinder: BRAUN, Rudolf, D-84556 Kastl (DE); ABSMAIER, Petra, D-84547 Emmerting (DE)
(86) Internationale Anmeldenummer: EP9201252
(87) Internationale Veröffentlichungsnummer: WO9221724

(56) Entgegenhaltungen:
- EP-A- 0 022 976
- WO-A-91/16371
- DE-A- 3 939 176
- FR-A- 1 125 886
- FR-A- 1 238 264
- US-A- 3 423 362
- US-A- 3 576 028
- US-A- 4 489 191
- JOURNAL OF ORGANIC CHEMISTRY Bd. 16, 1951, Seiten 383 - 386 A. F. RIELLY ET AL. 'Studies in Silico-Organic Compounds. XII. The Action of Certain Aliphatic Alcohols on Trialkoxysilanes'
- Noll, W., "Chemistry and Technology of Silicones, Academic Press Inc., 1968, S. 371-3, 395-8.

## Beschreibung

Die Erfindung betrifft Organo(poly)siloxanmassen, die unter Ausschluß von Wasser lagerfähig sind, bei Zutritt von Wasser jedoch schon bei Raumtemperatur unter Abspaltung von Alkoholen zu Elastomeren vernetzt werden können und ein Verfahren zur Herstellung solcher Massen.

Organopolysiloxanmassen, die unter Abspaltung von Alkoholen zu Elastomeren vernetzbar sind und Verfahren zu deren Herstellung sind vielfach bekannt. Hierzu sei beispielsweise auf US-PS 3,334,067 (Dow Corning Corp.; ausgegeben am 1. August 1967) verwiesen, worin ein Verfahren zur Herstellung von bei Raumtemperatur vernetzbaren Organopolysiloxanmassen durch Vermischen von Hydroxylgruppen aufweisendem Organopolysiloxan mit Organyl(triorganyloxy)silan und Titanverbindung beschrieben ist. Des weiteren werden in DE-OS 38 01 389 (Wacker-Chemie GmbH; ausgegeben am 27. Juli 1989) bzw. der entsprechenden US-Anmeldung mit der Seriennummer U.S.S.N. 29 3909 (angemeldet am 6. Januar 1989) unter Abspaltung von Alkoholen zu Elastomeren vernetzbare Organopolysiloxanmassen beschrieben, die durch Salze der 2. Haupt- und Nebengruppe mit verzweigtkettigen Carbonsäuren stabilisiert sind. Ferner ist in US-PS 3,708,467 (General Electric Co.; ausgegeben am 2. Januar 1973) eine härtbare Zusammensetzung beschrieben, die erhalten wird durch Mischen eines in den endständigen Einheiten Hydroxylgruppen aufweisenden Organopolysiloxans mit Methyltrimethoxysilan und einem Cokatalysatorsystem.

Solche Massen weisen jedoch im allgemeinen eine sehr geringe Vernetzungsgeschwindigkeit auf, so daß zur Beschleunigung Metallverbindungen, wie beispielsweise Zinnverbindungen, als Kondensationskatalysator zugesetzt werden müssen. Dadurch wird jedoch häufig die Lagerstabilität beeinträchtigt, so daß solche Massen nach längerer Lagerung nicht mehr oder nur noch sehr langsam aushärten.

In DE 39 39 176 A1 werden Organosiliciumverbindungen beschrieben, die keine SiC-Bindung aufweisen und aus H(R¹O)SiO_{2/2}- und H(R¹O)₂SiO_{1/2}-Einheiten bestehen, mit R¹ gleich Kohlenwasserstoffrest.

In FR 1125886 werden lineare Organopolysiloxane beschrieben, die an jedem Siliciumatom ein Wasserstoffatom und an den terminalen Siliciumatomen Alkoxygruppen aufweisen.

In EP 22 976 werden Polysiloxanformmassen, die aus hydroxyfunktionellem Siloxan, Vernetzer, Füllstoff, ggf. Härtungskatalysator und mindestens 3 Alkoxy-Gruppen aufweisender Siliciumverbindung, wie z. B. Tetraethoxysilan, bestehen.

Aufgabe der vorliegenden Erfindung war es, unter Abspaltung von Alkoholen zu Elastomeren vernetzbare Organo(poly)siloxanmassen bereitzustellen, die unter Ausschluß von Wasser für lange Zeit ohne wesentliche Änderung ihrer erwünschten Eigenschaften gelagert werden können und bei Zutritt von Wasser in relativ kurzer Zeit zu Elastomeren vernetzen. Ferner war es Aufgabe der vorliegenden Erfindung, ein Verfahren zur Herstellung von unter Abspaltung von Alkoholen zu Elastomeren vernetzbaren Organo(poly)siloxanmassen bereitzustellen. Diese Aufgaben werden durch die vorliegende Erfindung gelöst.

Gegenstand der Erfindung sind unter Ausschluß von Wasser lagerfähige, bei Zutritt von Wasser bei Raumtemperatur unter Abspaltung von Alkoholen zu Elastomeren vernetzbare Organo(poly)siloxanmassen, herstellbar aus
(A) α,ω-Dihydroxyorgano(poly)siloxan,
(B) Organosiliciumverbindung der allgemeinen Formel 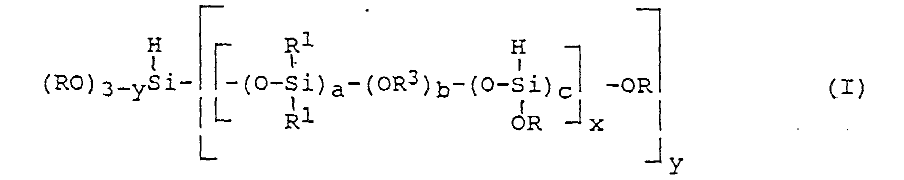 und/oder deren Teilhydrolysate und/oder deren Teilkondensate und/oder deren Teilcohydrolysate mit (C) und/oder deren Teilcokondensate mit (C) und/oder die Umsetzungsprodukte dieser Hydrolysate und Kondensate mit R²₃SiOH und/oder R²₃SiOSiR²₃, mit der Maßgabe, daß pro Molekül organosiliciumverbindung durchschnittlich mehr als zwei Organyloxyreste RO- bzw. R⁴O- mit R bzw. R⁴ gleich einwertigem, gegebenenfalls substituierten Kohlenwasserstoffrest vorhanden sind,
   wobei
   - R: gleich oder verschieden sein kann und einen einwertigen, gegebenenfalls substituierten Kohlenwasserstoffrest oder den Rest -SiR²₃ bedeutet,
   - R¹: gleich oder verschieden sein kann und Wasserstoffatom, einen einwertigen organischen Rest oder eine Organosiloxygruppe bedeutet,
   - R²: gleich oder verschieden sein kann und die Bedeutung von Wasserstoffatom oder einwertigem, organischen Rest hat,
   - R³: gleich oder verschieden sein kann und einen zweiwertigen gegebenenfalls substituierten organischen Rest bedeutet,
   - a: jeweils gleich oder verschieden sein kann und 0 oder eine ganze Zahl zwischen 1 und 1000 bedeutet,
   - b: jeweils gleich oder verschieden sein kann und 0 oder eine ganze Zahl zwischen 1 und 100 bedeutet,
   - c: jeweils gleich oder verschieden sein kann und 0 oder eine ganze Zahl zwischen 1 und 100 bedeutet,
   - x: jeweils gleich oder verschieden sein kann und 0 oder eine ganze Zahl zwischen 1 und 100 bedeutet und
   - y: 1, 2 oder 3 sein kann,
   sowie gegebenenfalls
(C) Organosiliciumverbindung der allgemeinen Formel 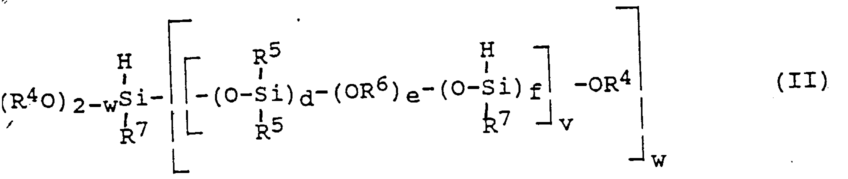 und/oder deren Teilhydrolysate und/oder deren Teilkondensate und/oder die Umsetzungsprodukte dieser Hydrolysate und Kondensate mit R²₃SiOH und/oder R²₃SiOSiR²₃, mit der Maßgabe, daß pro Molekül Organosiliciumverbindung durchschnittlich mehr als ein Organyloxyrest R⁴O- mit R⁴ gleich einwertigem, gegebenenfalls substituierten Kohlenwasserstoffrest vorhanden ist,
   worin
   - R⁴: gleich oder verschieden sein kann und einen einwertigen, gegebenenfalls substituierten Kohlenwasserstoffrest oder den Rest -SiR²₃, wobei R² gleich oder verschieden sein kann und die Bedeutung von Wasserstoffatom oder einwertigem, organischen Rest hat, bedeutet,
   - R⁵: gleich oder verschieden sein kann und Wasserstoffatom, einen einwertigen organischen Rest oder eine Organosiloxygruppe bedeutet,
   - R⁶: gleich oder verschieden sein kann und einen zweiwertigen gegebenenfalls substituierten organischen Rest bedeutet,
   - R⁷: einen einwertigen, SiC-gebundenen, gegebenenfalls substituierten Kohlenwaserstoffrest mit 1 bis 18 Kohlenstoffatomen bedeutet,
   - d: jeweils gleich oder verschieden sein kann und 0 oder eine ganze Zahl zwischen 1 und 1000 bedeutet,
   - e: jeweils gleich oder verschieden sein kann und 0 oder eine ganze Zahl zwischen 1 und 100 bedeutet,
   - f: jeweils gleich oder verschieden sein kann und 0 oder eine ganze Zahl zwischen 1 und 100 bedeutet,
   - v: jeweils gleich oder verschieden sein kann und 0 oder eine ganze Zahl zwischen 1 und 100 bedeutet und
   - w: 1 oder 2 sein kann,
   mit der Maßgabe, daß für den Fall x = 0 und/oder a=b=c=0 Organosiliciumverbindung (C) der allgemeinen Formel (II) mit v verschieden 0 und (d+e+f) verschieden 0 mitverwendet wird.

Bei den erfindungsgemäßen Organo(poly)siloxanmassen handelt es sich bei der Komponente (A) vorzugsweise um α,ω- Dihydroxydiorgano(poly)siloxan der allgemeinen Formel 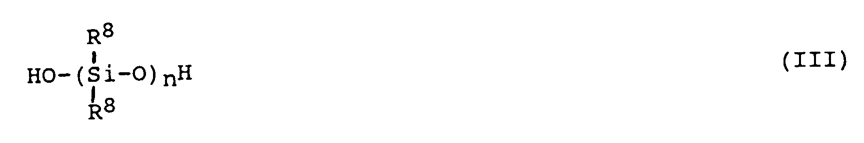 worin R⁸ gleiche oder verschiedene, einwertige, SiC-gebundene organische Reste bedeutet und n eine Zahl von mindestens 20, bevorzugt zwischen 100 und 2000, besonders bevorzugt zwischen 500 und 1500, insbesondere zwischen 600 und 1400, ist.

Obwohl durch Formel (III) nicht dargestellt, können bis zu 10 Molprozent der Diorganosiloxaneinheiten durch andere Siloxaneinheiten, wie beispielsweise R⁸SiO_{3/2}- und/oder SiO_{4/2}-Einheiten, ersetzt sein, wobei R⁸ die oben dafür angegebene Bedeutung hat. Des weiteren können die Organo(poly)siloxane gemäß Formel (III) - obwohl ebenfalls nicht in Formel (III) dargestellt - herstellungsbedingt bis zu 10 Molprozent andere funktionelle Gruppen, wie beispielsweise HR⁸SiO- und HSiO_{3/2}-Gruppen, enthalten.

Bei dem Rest R⁸ handelt es sich bevorzugt um gegebenenfalls substituierte Kohlenwasserstoffreste mit 1 bis 18 Kohlenstoffatom(en).

Beispiele für Reste R⁸ sind Alkylreste, wie der Methyl-, Ethyl-, n- Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, Octadecylreste, wie der n-Octadecylrest; Alkenylreste, wie der Vinyl- und der Allylrest; Cycloalkylreste, wie Cyclopentyl-, Cyclohexyl-, Cycloheptylreste und Methylcyclohexylreste; Arylreste, wie der Phenyl-, Naphthyl- und Anthryl- und Phenanthrylrest; Alkarylreste, wie o-, m-, p-Tolylreste, Xylylreste und Ethylphenylreste und Aralkylreste, wie der Benzylrest, der alpha- und der β-Phenylethylrest.

Weitere Beispiele für Reste R⁸ sind lineare oder verzweigte oder cyclische, mit Acryloxy-, Methacryloxy-, Epoxy-, Allyl-, Cyclohexenyl-, Cyanogruppen und/oder mit Halogenatomen substituierte Kohlenwasserstoffreste.

Beispiele für substituierte Reste R⁸ sind Cyanalkylreste, wie der β-Cyanethylrest, und halogenierte Kohlenwasserstoffreste, beispielsweise Halogenalkylreste, wie der 3,3,3-Trifluor-n-propylrest, der 2,2,2,2',2',2'-Hexafluorisopropylrest, der Heptafluorisopropylrest, und Halogenarylreste, wie der o-, m-, und p-Chlorphenylrest.

Besonders bevorzugt als Reste R⁸ sind Methyl-, Ethyl- und n-Propylreste, insbesondere der Methylrest.

Vorzugsweise sind schon wegen der leichten Zugänglichkeit mindestens 90 % der Anzahl der Reste R⁸ in Formel (III) Methylreste.

Bei dem erfindungsgemäß eingesetzten α,ω-Dihydroxydiorgano(poly)siloxan kann es sich um gleiche oder verschiedene Homo- oder Mischpolymerisate handeln, wobei die einzelnen Moleküle gleiche oder verschiedene Kettenlänge aufweisen können.

Die erfindungsgemäß eingesetzten α,ω-Dihydroxyorgano(poly)siloxane besitzen bei 25°C vorzugsweise eine Viskosität von 1 000 bis 400 000 mPa·s, besonders bevorzugt von 20 000 bis 350 000 mPa·s.

Beispiele für die erfindungsgemäß eingesetzten α,ω-Dihydroxyorgano(poly)siloxane gemäß Formel (III) sind α,ω-Dihydroxydimethyl(poly)siloxane, α,ω-Dihydroxydimethyl/methylvinylco(poly)siloxane, α,ω-Dihydroxydimethyl/methylphenylco(poly)siloxane und α,ω-Dihydroxydimethyl/methyl-3,3,3-trifluor-n-propylco(poly)siloxane.

Die Herstellung der in den erfindungsgemäßen Massen eingesetzten α,ω-Dihydroxyorgano(poly)siloxane ist vielfach bekannt. Hierzu sei beispielsweise auf W. Noll, "Chemistry and Technology of Silicones", 1968, Academic Press Inc., Seite 218 ff verwiesen.

Bei den Resten R und R⁴ handelt es sich jeweils unabhängig voneinander vorzugsweise um Kohlenwasserstoffreste mit 1 bis 10 Kohlenstoffatom(en), die durch Alkoxygruppen mit 1 bis 3 Kohlenstoffatom(en) und anderen nichtalkalischen, organischen Resten substituiert sein können, sowie um den Rest - SiR²₃ mit R² gleich der obengenannten Bedeutung.

Beispiele für die Reste R und R⁴ sind die für den Rest R⁸ angegebenen Beispiele für Kohlenwasserstoffreste mit 1 bis 10 Kohlenstoffatom(en), -Si(CH₃)₃, -CH₂CH₂OCH₃,

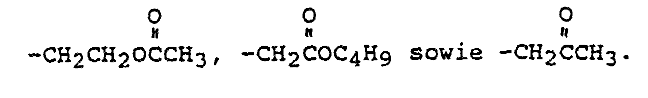

Besonders bevorzugt handelt es sich bei den Kohlenwasserstoffresten R und R⁴ jeweils unabhängig voneinander um Methyl-, Ethyl- und n-Propylreste, insbesondere um den Ethylrest.

Falls es sich bei Rest R und R⁴ um einen Rest -SiR²₃ mit R² gleich der obengenannten Bedeutung handelt ist -Si(CH₃)₃ besonders bevorzugt.

Bei den Resten R¹ und R⁵ handelt es sich jeweils unabhängig voneinander bevorzugt um Wasserstoffatom und um gegebenenfalls substituierte Kohlenwasserstoffreste mit 1 bis 18 Kohlenstoffatom(en).

R¹ wie auch R⁵ kann aber auch - meist jedoch nur zu einem geringen Prozentsatz - die Bedeutung von Organosiloxyrest haben. Bei dem Organosiloxyrest kann es sich dabei um beliebige Organosiliciumverbindungen, wie lineare oder verzweigte Organo(poly)siloxane oder Silane, handeln, die mit einem Siliciumatom über Sauerstoff an das Siliciumatom der 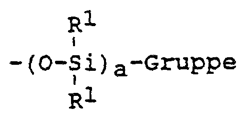 in Formel (I) bzw. der 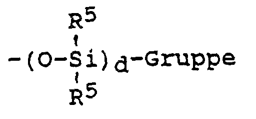 in Formel (II) gebunden sind.

Bevorzugt handelt es sich bei dem Rest R² um Wasserstoffatom und gegebenenfalls substituierte Kohlenwasserstoffreste mit 1 bis 18 Kohlenstoffatom(en), wobei vorzugsweise in der SiR²₃-Einheit nicht mehr als ein Rest R² die Bedeutung von Wasserstoffatom hat.

Beispiele für die Reste R¹, R² und R⁵ sind die für Rest R⁸ angegebenen Beispiele.

Besonders bevorzugt handelt es sich bei den Resten R¹ und R⁵ jeweils unabhängig voneinander um Wasserstoffatom, Methyl-, Ethyl-, Propyl- und Vinylreste.

Besonders bevorzugt handelt es sich bei Rest R² um Wasserstoffatom, Methyl-, Ethyl- und Vinylreste.

Beispiele für Rest R⁷ sind die für Rest R⁸ angegebenen Beispiele.

Besonders bevorzugt handelt es sich bei Rest R⁷ um Methyl-, Ethyl-, n-Propyl- und 3,3,3-Trifluor-n-propylreste, insbesondere um den Methylrest.

Bei den Resten R³ und R⁶ handelt es sich jeweils unabhängig voneinander bevorzugt um
zweiwertige lineare Reste der Formel -(C_{q}H_{2q-o}R'ₒ)-, worin R' einen nichtalkalischen organischen Rest, wie etwa gegebenenfalls substituierte Alkyl- oder Arylreste, HO-, R"O-, R"-COO- und R"-CO- mit R" gleich organischem Rest, bedeutet, q gleich einer Zahl von 2 bis 20 ist und o gleich 0 oder eine Zahl von 1 bis 10 ist,
zweiwertige cyclische Reste der Formel -(CⱼH₂ⱼ₋₂₋₁R'₁)-, worin R' eine der obengenannten Bedeutung hat, j eine Zahl von 3 bis 8 ist und 10 oder eine Zahl von 1 bis 8 ist sowie um
zweiwertige aromatische, gegebenenfalls mit R' substituierte Reste mit 6 bis 20 Kohlenstoffatomen.

Beispiele für Rest R³ und R⁶ sind Methylen-, Ethylen-, n-Propylen-, iso-Propylen-, 1-n-Butylen-, 2-n-Butylen-, iso-Butylen-, tert.-Butylen-, n-Pentylen-, iso-Pentylen-, neo-Pentylen-, tert.-Pentylenrest, Hexylenreste, wie der n-Hexylenrest, Heptylenreste, wie der n-Heptylenrest, Octylenreste, wie der n-Octylenrest und iso-Octylenreste, wie der 2,2,4-Trimethylpentylenrest, Nonylenreste, wie der n-Nonylenrest und Decylenreste, wie der n-Decylenrest, sowie Cycloalkylenreste, wie Cyclopentylen-, Cyclohexylen-,Cycloheptylenreste und Methylcyclohexylenreste, Cyanalkylenreste, wie der β-Cyanethylenrest, und halogenierte Kohlenwasserstoffreste, beispielsweise Halogenalkylenreste, wie der 3,3,3-Trifluor-n-propylenrest, der 2,2,2,2',2',2'-Hexafluorisopropylenrest, und Halogenarylenreste, wie der o-, m-, und p-Chlorphenylenrest sowie gegebenenfalls substituierte m- oder p-Propyloxyphenylenreste, 1,4-Phenylen-, 1,3-Phenylen-, 4,4'-Biphenylen-, 3,3'-Biphenylen-, 3,4'-Biphenylen-, 1,4-Naphthalindiyl-, 1,5-Naphthalindiyl-, 1,4-Anthrachinondiyl-, 1,5-Anthrachinondiyl-, 2,6-Anthrachinondiyl-, Diphenylmethan-4,4'-diyl-, 2,2-Bisphenylpropan-4,4'-diyl-, 2,2-Bis-phenylperfluorpropan-4,4'-diyl-, 3,3-Bisphenylphthalid-4,4'-diyl- und Bisphenylsulfon-4,4'-diylrest, 2-Methyl-1,4-phenylen-, 2-Chlor-1,4-phenylen-, 2-Phenyl-1,4-phenylen-, 2-Cyano-1,4-phenylen-, 2,2'-Dimethyl-4,4'-biphenylen- und 3,3'-Dimethyl-4,4'-biphenylenrest.

Besonders bevorzugt handelt es sich bei Rest R³ und R⁶ jeweils unabhängig voneinander um zweiwertige lineare Reste -(CH₂)₂₋₈-, insbesondere um -(CH₂)₆-.

In den erfindungsgemäßen Organo(poly)siloxanmassen wird als Komponente (B) vorzugsweise solche, ausgewählt aus der Gruppe bestehend aus

(RO)₃-Si-H (IV)

und/oder deren Teilhydrolysate und/oder deren Teilkondensate und/oder deren Teilcohydrolysate mit (C) und/oder deren Teilcokondensate mit (C) und/oder die Umsetzungsprodukte dieser Hydrolysate und Kondensate mit R² ₃SiOH und/oder R² ₃SiOSiR² ₃, wobei R und R² eine der obengenannten Bedeutungen haben, mit der Maßgabe, daß pro Molekül Organosiliciumverbindung durchschnittlich mehr als zwei Organyloxyreste RO- bzw. R⁴O- mit R bzw. R⁴ gleich einwertigem, gegebenenfalls substituierten Kohlenwasserstoffrest vorhanden sind, 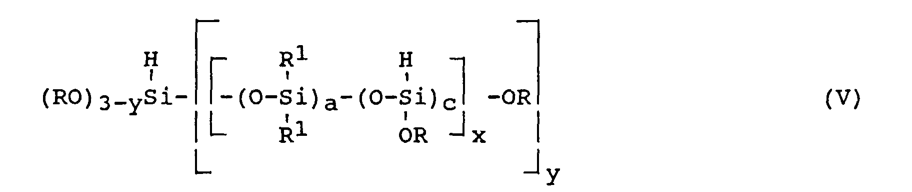 und/oder deren Teilhydrolysate und/oder deren Teilkondensate und/oder deren Teilcohydrolysate mit (C) und/oder deren Teilcokondensate mit (C) und/oder die Umsetzungsprodukte dieser Hydrolysate und Kondensate mit R² ₃SiOH und/oder R² ₃SiOSiR² ₃, wobei R, R¹, R², a, c, x und y jeweils die oben angegebene Bedeutung haben, mit der Maßgabe, daß pro Molekül Organosiliciumverbindung durchschnittlich mehr als zwei Organyloxyreste RO- bzw. R⁴O- mit R bzw. R⁴ gleich einwertigem, gegebenenfalls substituierten Kohlenwasserstoffrest vorhanden sind und x verschieden 0 ist und a sowie c jeweils durchschnittlich verschieden 0 sind, 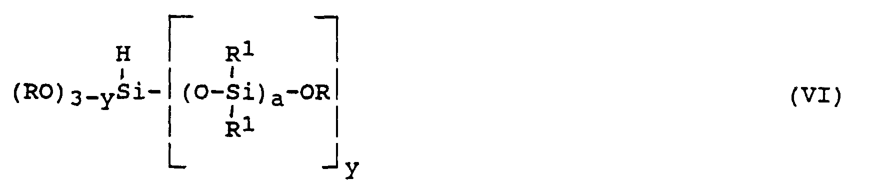 und/oder die entsprechenden Teilhydrolysate und/oder Teilkondensate und/oder deren Teilcohydrolysate mit (C) und/oder deren Teilcokondensate mit (C) und/oder die Umsetzungsprodukte dieser Hydrolysate und Kondensate mit R²₃SiOH und/oder R²₃SiOSiR²₃, wobei R, R¹, R², a und y jeweils die oben angegebene Bedeutungen haben, mit der Maßgabe, daß pro Molekül Organosiliciumverbindung durchschnittlich mehr als zwei Organyloxyreste RO- bzw. R⁴O- mit R bzw. R⁴ gleich einwertigem, gegebenenfalls substituierten Kohlenwasserstoffrest vorhanden sind und a verschieden 0 ist sowie 0 bis 50 Prozent der Anzahl der Reste R¹ die Bedeutung von Wasserstoffatom haben, 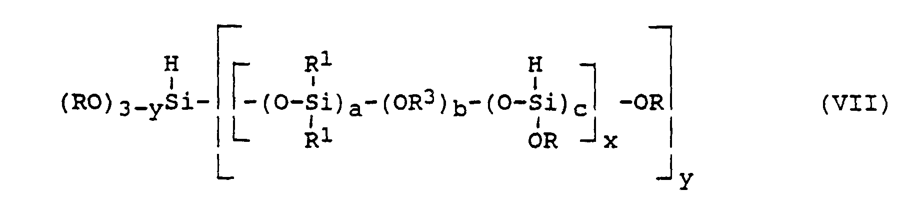 und/oder die entsprechenden Teilhydrolysate und/oder Teilkondensate und/oder deren Teilcohydrolysate mit (C) und/oder deren Teilcokondensate mit (C) und/oder die Umsetzungsprodukte dieser Hydrolysate und Kondensate mit R²₃SiOH und/oder R²₃SiOSiR²₃, wobei R, R¹, R², R³, a, b, c, x und y jeweils die oben angegebene Bedeutungen haben, mit der Maßgabe, daß pro Molekül Organosiliciumverbindung durchschnittlich mehr als zwei Organyloxyreste RO- bzw. R⁴O- mit R bzw. R⁴ gleich einwertigen, gegebenenfalls substituierten Kohlenwasserstoffrest vorhanden sind und x verschieden 0 ist sowie b durchschnittlich größer 0 ist,
sowie deren Gemische, eingesetzt.

Beispiele für die erfindungsgemäß als Komponente (B) eingesetzten Silane der Formel (IV) sind Hydrogentriethoxysilan, Hydrogentrimethoxysilan, Hydrogentri(n-propyloxy)silan, Hydrogendimethoxyethoxysilan, Hydrogenmethoxydiethoxysilan, Hydrogentri(2-methoxyethoxy)silan, Hydrogentri(iso-propenoxy)silan, wobei Hydrogentriethoxysilan bevorzugt ist.

Vorzugsweise handelt es sich bei den erfindungsgemäß eingesetzten Teilhydrolysaten und Teilkondensaten von Silanen der Formel (IV) sowie deren Umsetzungsprodukten mit R²₃SiOH und/oder R²₃SiOSiR²₃ mit R² gleich der obengenannten Bedeutung um solche aus (RO)₂HSiO_{1/2}-, (RO)HSiO- und HSiO_{3/2}-Einheiten, mit R gleich der oben dafür angegebenen Bedeutung, mit der Maßgabe, daß pro Molekül durchschnittlich mehr als zwei Reste R die Bedeutung von einwertigem, gegebenenfalls substituierten Kohlenwasserstoffrest haben, wie beispielsweise das Hydrolysat eines Gemisches aus Hydrogentriethoxysilan und Diethoxy(trimethylsiloxy)hydrogensilan.

Vorzugsweise handelt es sich bei den Teilcohydrolysaten und Teilcokondensaten mit (C) um solche aus Silan der Formel (IV) und Silan der Formel 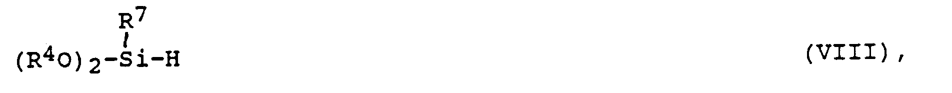 wobei die Teilcohydrolysate und Teilcokondensate sowie deren Umsetzungsprodukte (RO)₂HSiO_{1/2}-, (RO)HSiO-, HSiO_{3/2}-, (R⁴O)R⁷HSiO_{1/2}- und R⁷HSiO-Einheiten aufweisen mit R, R⁴ und R⁷ gleich der obengenannten Bedeutung, mit der Maßgabe, daß pro Molekül durchschnittlich mehr als zwei Reste R bzw. R⁴ die Bedeutung von einwertigem, gegebenenfalls substituierten Kohlenwasserstoffrest haben.

Besonders bevorzugt handelt es sich bei den Teil(co)hydrolysaten und Teil(co)kondensaten sowie deren Umsetzungsprodukten um solche, die flüssig und/oder in Siloxanen löslich sind.

Vorzugsweise haben 0 bis 80 Prozent, besonders bevorzugt 0 bis 50 Prozent, der Anzahl der Reste R bzw. R⁴ in den Teil(co)hydrolysaten und Teil(co)kondensaten sowie deren Umsetzungsprodukte die Bedeutung -SiR²₃, wobei R² die obengenannte Bedeutung hat.

Vorzugsweise haben die Teil(co)hydrolysate und Teil(co)kondensate sowie deren Umsetzungsprodukte ein Molekulargewicht zwischen 198 und 10000, besonders bevorzugt zwischen 274 und 1500, und weisen bevorzugt 2 bis 100, besonders bevorzugt 3 bis 15, Siloxaneinheiten auf.

Beispiele für Teilhydrolysate und Teilkondensate von Silanen der Formel (IV) sowie deren Umsetzungsprodukte sind Verbindungen der durchschnittlichen Zusammensetzung 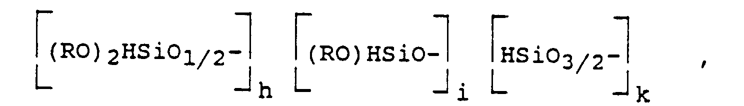 worin R gleich oder verschieden sein kann und die obengenannte Bedeutung hat, h durchschnittlich 0,02 bis 1, i durchschnittlich 0 bis 0,98 und k durchschnittlich 0 bis 0,5 ist, mit der Maßgabe, daß die Summe aus h, i und k gleich 1 ist und pro Molekül durchschnittlich mehr als zwei Gruppen -OR mit R gleich einwertigen, gegebenenfalls substituierten Kohlenwasserstoffrest vorhanden sind, wobei Teilhydrolysate bzw. Teilkondensate von Hydrogentriethoxysilan und deren Umsetzungsprodukte mit Trimethylsilanol und/oder Hexamethyldisiloxan, die durchschnittlich mehr als zwei Ethoxygruppen aufweisen, besonders bevorzugt sind.

Beispiele für Teilcohydrolysate und Teilcokondensate von Silanen der Formel (IV) mit Silanen der Formel (VIII) sowie deren Umsetzungsprodukte sind Verbindungen der durchschnittlichen Zusammensetzung 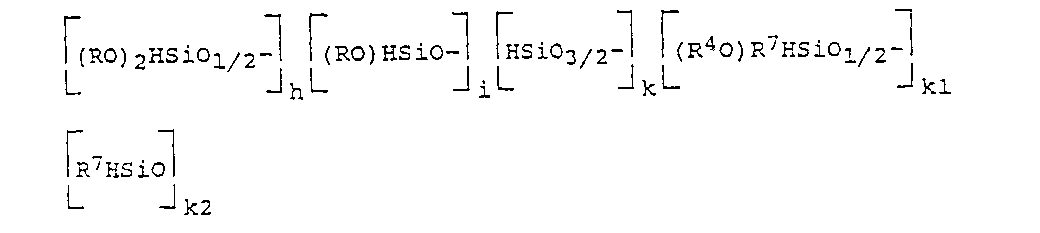 worin R, R⁴ und R⁷ eine der oben angegebenen Bedeutungen haben, h 0,02 bis 0,95, i 0 bis 0,98, k 0 bis 0,5 ist, k1 0 bis 0,95 und k2 0 bis 0,95 ist, mit der Maßgabe, daß die Summe aus h, 1, k, k1 und k2 gleich 1 ist und pro Molekül durchschnittlich mehr als zwei Gruppen -OR bzw. -OR⁴ mit R bzw. R⁴ gleich einwertigem, gegebenenfalls substituierten Kohienwasserstoffrest vorhanden sind, wobei Teilcohydrolysate und Teilcokondensate aus Hydrogentriethoxysilan und Hydrogenmethyldiethoxysilan sowie deren Umsetzungsprodukte mit Trimethylsilanol und/oder Hexamethyldisiloxan, die durchschnittlich mehr als zwei Ethoxygruppen aufweisen, besonders bevorzugt sind.

Bevorzugt handelt es sich bei den als Komponente (B) eingesetzten Siloxanen der Formel (V) um niedermolekulare Organo(poly)siloxane mit Organyloxy- und Hydrogengruppen aufweisenden, endständigen Siloxaneinheiten.

Beispiele für die erfindungsgemäßen Siloxane der Formel (V) sind
α,ω-Bis(hydrogendimethoxysiloxy)dimethyl(poly)siloxane, α,ω-Bis(hydrogendiethoxysiloxy)dimethyl(poly)siloxane, α,ω-Bis(hydrogendiethoxysiloxy)dimethyl/methylvinylco(poly)siloxane, α,ω-Bis(hydrogendimethoxysiloxy)hydrogenmethyl(poly)siloxane, α,ω-Bis(hydrogendiethoxysiloxy)dimethyl/hydrogenmethylco(poly)siloxane, α,ω-Bis(hydrogendiethoxysiloxy)ethoxyhydrogen/hydrogenmethylco(poly)siloxane, α,ω-Bis(hydrogendiethoxysiloxy)ethoxyhydrogen/dimethylco(poly)siloxane, α-(Hydrogendiethoxysiloxy)-ω-(hydrogenethoxymethylsiloxy)dimethyl(poly)siloxane sowie alle die Verbindungen der genannten Art, in denen die Ethoxygruppen ganz oder teilweise durch andere Alkyloxygruppen, wie beispielsweise durch Methoxy- oder n-Propoxyreste, oder Trimethylsiloxygruppen ausgetauscht sind, mit der Maßgabe, daß mehr als zwei Alkoxygruppen pro Molekül vorhanden sind.

Besonders bevorzugt werden als Organo(poly)siloxane der Formel (V) solche der Formel 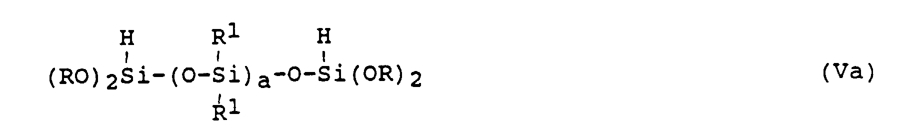 und/oder die entsprechenden Teilhydrolysate und/oder Teilkondensate und/oder deren Umsetzungsprodukte mit R²₃SiOH bzw. R²₃SiOR²₃ eingesetzt, worin R, R¹ und R² jeweils gleich oder verschieden sein können und eine der obengenannten Bedeutung haben und a eine ganze Zahl zwischen 0 und 1000, insbesondere zwischen 0 und 100 bedeutet, mit der Maßgabe, daß pro Molekül mehr als zwei der Reste R die Bedeutung von einwertigem, gegebenenfalls substituierten Kohlenwasserstoffrest haben.

Beispiele für besonders bevorzugt eingesetzte Organo(poly)siloxane der Formel (V) sind α,ω-Bis(hydrogendiethoxysiloxy)dimethyl(poly)siloxane sowie α-(Hydrogendiethoxysiloxy)-ω-(hydrogen(trimethylsiloxy)-ethoxysiloxy)dimethyl(poly)siloxane.

Die erfindungsgemäß eingesetzten Organo(poly)siloxane der Formel (V) besitzen bei einer Temperatur von 23°C eine Viskosität von vorzugsweise 1 bis 100000 mPa·s, besonders bevorzugt von 5 bis 500 mPa·s.

Beispiele für die erfindungsgemäß als Komponente (B) eingesetzten Organo(poly)siloxane der Formel (VI) sind (C₂H₅O)₂HSi(OSi(CH₃)₂)ᵤOC₂H₅, (C₂H₅O)₂HSi(OSiHCH₃)ᵤOC₂H₅, (C₂H₅O)HSi[(OSiHCH₃)ᵤOC₂H₅]₂, HSi[(OSiHCH₃)ᵤOC₂H₅]₃, wobei u eine Zahl von 1 bis 20 ist, deren Gemische sowie alle die Verbindungen der genannten Art, in denen die Ethoxygruppen ganz oder teilweise durch andere Alkyloxygruppen, wie beispielsweise durch Methoxy- oder n-Propoxyreste, oder durch Trimethylsiloxygruppen ausgetauscht sind, mit der Maßgabe, daß durchschnittlich mehr als zwei Alkoxygruppen pro Molekül vorhanden sind.

Vorzugsweise haben 0 bis 50 Prozent, insbesondere 40 bis 50 Prozent, der Anzahl der Reste R¹ die Bedeutung von Wasserstoffatom, wobei ein Siliciumatom nicht mehr als ein Si-gebundenes Wasserstoffatom aufweisen soll.

Die erfindungsgemäß eingesetzten Organo(poly)siloxane der Formel (VI) haben vorzugsweise 2 bis 100, insbesondere 4 bis 20, Siloxaneinheiten und bei einer Temperatur von 23°C eine Viskosität von vorzugsweise 2 bis 2000 mPa·s, besonders bevorzugt von 4 bis 100 mPa·s.

Bevorzugt handelt es sich bei den Organo(poly)siloxanen der Formel (VI) um (C₂H₅O)₂HSi(OSi(CH₃)₂)ᵤOC₂H₅, (C₂H₅O)₂HSi(OSiHCH₃)ᵤOC₂H₅, (C₂HSO)HSi[(OSiHCH₃)ᵤOC₂H₅]₂, HSi[(OSiHCH₃)ᵤOC₂H₅]₃, wobei u eine Zahl von 1 bis 10 ist, deren Gemische sowie deren Umsetzungsprodukte mit Trimethylsilanol und/oder Hexamethyldisiloxan, mit der Maßgabe, daß mehr als zwei Ethoxygruppen pro Molekül vorhanden sind, wobei Gemische der vorstehend genannten Verbindungen sowie deren Umsetzungsprodukte herstellungsbedingt besonders bevorzugt sind.

In Formel (VII) bedeutet a eine ganze Zahl bevorzugt zwischen 0 und 100, besonders bevorzugt zwischen 0 und 50, b eine ganze Zahl bevorzugt zwischen 0 und 50, besonders bevorzugt zwischen 0 und 20 und c eine ganze Zahl bevorzugt zwischen 0 und 50, besonders bevorzugt zwischen 0 und 20.

Beispiele für die erfindungsgemäß als Komponente (B) eingesetzten Organo(poly)siloxane der Formel (VII) sind 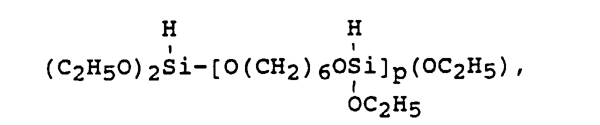 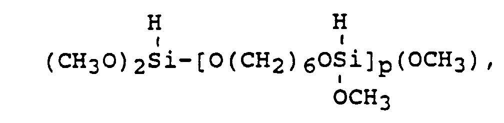 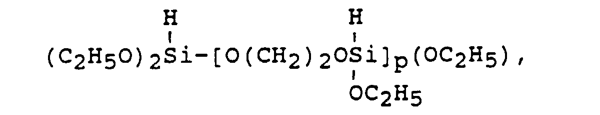 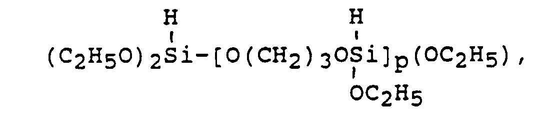 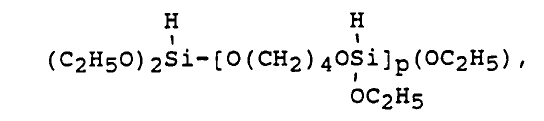 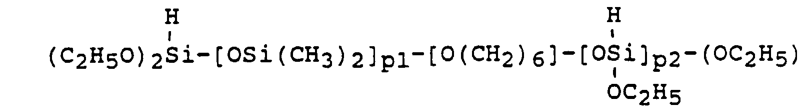 sowie deren Umsetzungsprodukte mit R²₃SiOH bzw. R²₃SiOR²₃, wobei R² die obengenannten Bedeutung hat, p eine Zahl von 1 bis 50, p1 eine Zahl von 1 bis 1000 und p2 eine Zahl von 1 bis 20 ist, mit der Maßgabe, daß pro Molekül durchschnittlich mehr als zwei Alkoxygruppen vorhanden sind.

Die erfindungsgemäß eingesetzten Organo(poly)siloxane der Formel (VII) haben vorzugsweise 2 bis 100, insbesondere 2 bis 50, Siloxaneinheiten und eine Viskosität von vorzugsweise 1 bis 20000 mPa·s, besonders bevorzugt von 1 bis 1000 mPa·s.

Bevorzugt handelt es sich bei den Organo(poly)siloxanen der Formel (VII) um 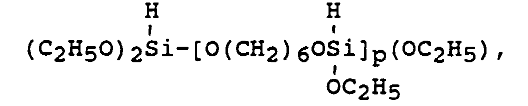 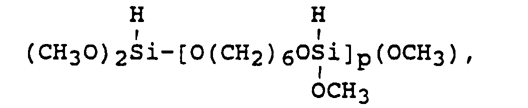 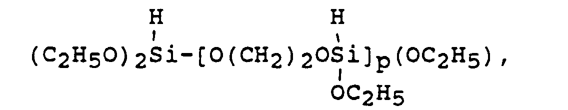 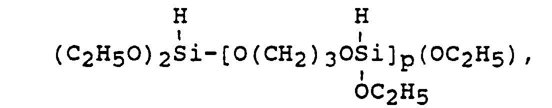 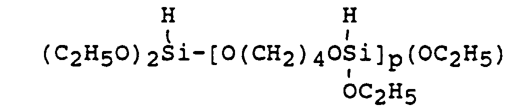 und 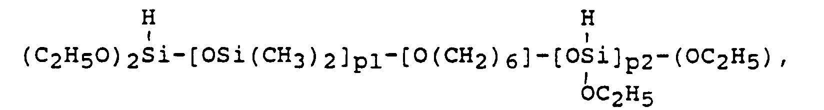 wobei p eine Zahl von 1 bis 20, p1 eine Zahl von 1 bis 100 und p2 eine Zahl von 1 bis 10 ist sowie deren Umsetzungsprodukte mit Trimethylsilanol bzw. Hexamethyldisiloxan, mit der Maßgabe, daß pro Molekül mehr als zwei Alkoxygruppen vorhanden sind, wobei 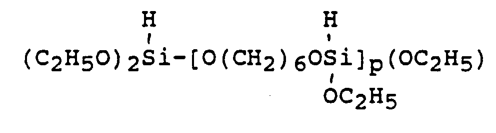 besonders bevorzugt ist.

Ein weiterer Gegenstand der vorliegenden Erfindung sind Organosiliciumverbindungen der Formel 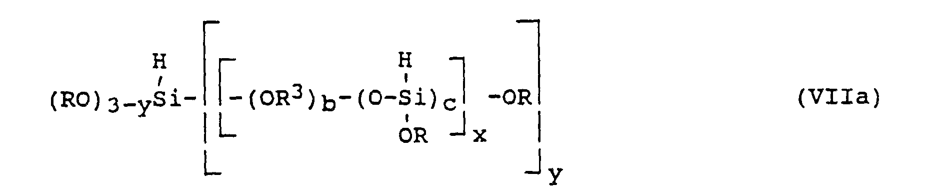 und/oder die entsprechenden Teilhydrolysate und/oder Teilkondensate und/oder deren Teilcohydrolysate mit (C) und/oder deren Teilcokondensate mit (C) und/oder die Umsetzungsprodukte dieser Hydrolysate und Kondensate mit R²₃SiOH und/oder R²₃SiOSiR²₃,
wobei
- R: gleich oder verschieden sein kann und einen einwertigen, gegebenenfalls substituierten Kohlenwasserstoffrest oder den Rest -SiR²₃ bedeutet,
- R²: gleich oder verschieden sein kann und die Bedeutung von Wasserstoffatom oder einwertigem, organischen Rest hat,
- R³: gleich oder verschieden sein kann und einen zweiwertigen gegebenenfalls substituierten organischen Rest bedeutet,
- b: jeweils gleich oder verschieden sein kann und 0 oder eine ganze Zahl zwischen 1 und 100 bedeutet,
- c: jeweils gleich oder verschieden sein kann und 0 oder eine ganze Zahl zwischen 1 und 100 bedeutet,
- x: jeweils gleich oder verschieden sein kann und eine ganze Zahl zwischen 1 und 100 bedeutet und
- y: 1, 2 oder 3 sein kann,
mit der Maßgabe, daß pro Molekül Organosiliciumverbindung durchschnittlich mehr als zwei Organyloxyreste RO- bzw. R⁴O- mit R bzw. R⁴ gleich einwertigem, gegebenenfalls substituierten Kohlenwasserstoffrest vorhanden sind und sowohl b als auch c durchschnittlich größer 0 ist.

Bei der in den erfindungsgemäßen Organo(poly)siloxanmassen gegebenenfalls zugegebenen Komponente (C) handelt es sich vorzugsweise um solche, ausgewählt aus der Gruppe bestehend aus 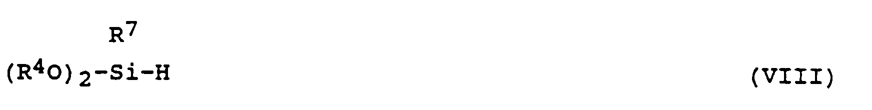 und/oder deren Teilhydrolysate und/oder deren Teilkondensate und/oder die Umsetzungsprodukte dieser Hydrolysate und Kondensate mit R²₃SiOH und/oder R²₃SiOSiR²₃, wobei R², R⁴ und R⁷ eine der oben angegebenen Bedeutungen haben, mit der Maßgabe, daß pro Molekül Organosiliciumverbindung durchschnittlich mehr als ein Organyloxyrest R⁴O- mit R⁴ gleich einwertigem, gegebenenfalls substituierten Kohlenwasserstoffrest vorhanden ist, 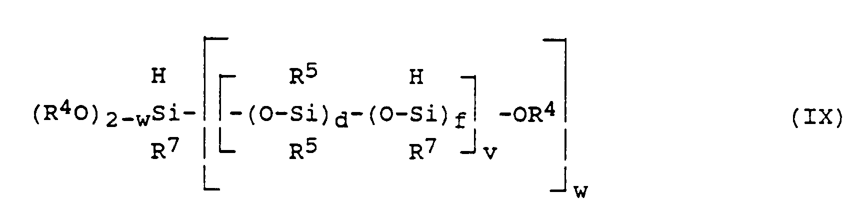 und/oder die entsprechenden Teilhydrolysate und/oder Teilkondensate und/oder die Umsetzungsprodukte dieser Hydrolysate und Kondensate mit R²₃SiOH und/oder R²₃SiOSiR²₃, wobei R², R⁴, R⁵, R⁷, d, f, v und w eine der oben angegebenen Bedeutungen haben, mit der Maßgabe, daß pro Molekül Organosiliciumverbindung durchschnittlich mehr als ein Organyloxyrest R⁴O- mit R⁴ gleich einwertigen, gegebenenfalls substituierten Kohlenwasserstoffrest vorhanden ist und v verschieden 0 ist und d sowie f jeweils durchschnittlich verschieden 0 sind, 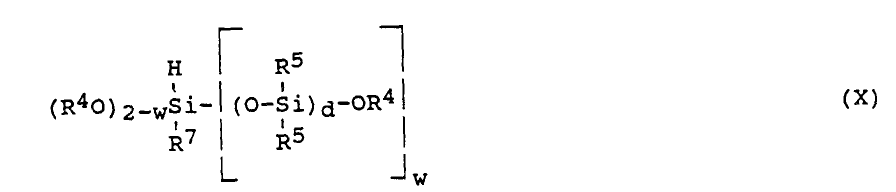 und/oder die entsprechenden Teilhydrolysate und/oder Teilkondensate und/oder die Umsetzungsprodukte dieser Hydrolysate und Kondensate mit R²₃SiOH und/oder R²₃SiOSiR²₃, wobei R², R⁴, R⁵, R⁷, d und w eine der oben angegebenen Bedeutungen haben, mit der Maßgabe, daß pro Molekül Organosiliciumverbindung durchschnittlich mehr als ein Organyloxyrest R⁴O- mit R⁴ gleich einwertigem, gegebenenfalls substituierten Kohlenwasserstoffrest vorhanden ist und d verschieden 0 ist sowie 0 bis 50 Prozent der Anzahl der Reste R⁵ die Bedeutung von Wasserstoffatom haben, 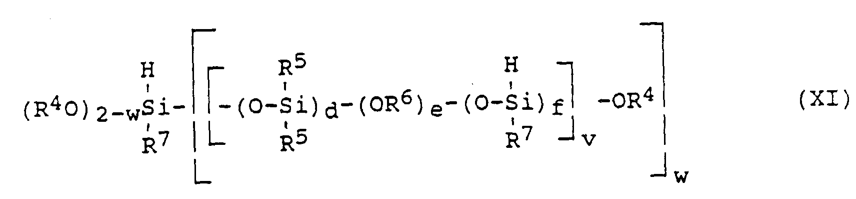 und/oder die entsprechenden Teilhydrolysate und/oder Teilkondensate und/oder die Umsetzungsprodukte dieser Hydrolysate und Kondensate mit R²₃SiOH und/oder R²₃SiOSiR²₃, wobei R², R⁴, R⁵, R⁶, R⁷, d, e, f, v und w eine der oben angegebenen Bedeutungen haben, mit der Maßgabe, daß pro Molekül Organosiliciumverbindung durchschnittlich mehr als ein Organyloxyrest R⁴O- mit R⁴ gleich einwertigem, gegebenenfalls substituierten Kohlenwasserstoffrest vorhanden ist und v verschieden 0 ist und e durchschnittlich größer 0 ist,
sowie deren Gemische.

Beispiele für die erfindungsgemäß als Komponente (C) eingesetzten Silane der Formel (VIII) sind Hydrogenmethyldiethoxysilan, Hydrogenmethyldimethoxysilan, Hydrogenmethyldi(n-propyloxy)silan, Hydrogenmethylmethoxyethoxysilan, Hydrogenmethyldi(2-methoxyethoxy)silan und Hydrogenmethyldi(isopropenoxy)silan, wobei Hydrogenmethyldiethoxysilan bevorzugt wird.

Vorzugsweise handelt es sich bei den erfidungsgemäß eingesetzten Teilhydrolysaten und Teilkondensaten von Silanen der Formel (VIII) sowie deren Umsetzungsprodukten mit R²₃SiOH und/oder R²₃SiOSiR²₃ mit R² gleich der obengenannten Bedeutung um solche aus (R⁴O)HR⁷SiO_{1/2}- und R⁷HSiO-Einheiten, mit R⁴ und R⁷ gleich der oben dafür angegebenen Bedeutung, mit der Maßgabe, daß pro Molekül durchschnittlich mehr als ein Rest R⁴ die Bedeutung von gegebenenfalls substituiertem Kohlenwasserstoffrest hat.

Vorzugsweise haben die Teilhydrolysate ein Molekulargewicht zwischen 162 und 7000, besonders bevorzugt zwischen 250 und 3000, und weisen bevorzugt 2 bis 100, besonders bevorzugt 3 bis 50, Siloxaneinheiten auf.

Silane der Formel (VIII) sowie deren Teilhydrolysate sind wie auch Silane der Formel (IV) sowie deren Teilhydrolysate vielfach bekannt. Hierzu sei beispielsweise auf A.F. Rielly, H.W. Post, J. Org. Chem. 16 (1951) 383. verwiesen.

Beispiele für Teilhydrolysate aus Silanen der Formel (VIII) sind α,ω-Bis(hydrogenmethoxymethylsiloxy)hydrogenmethyl(poly)siloxane und α,ω-Bis(hydrogenethoxymethylsiloxy)hydrogenmethyl(poly)siloxane, wobei α,ω-Bis(hydrogenethoxymethylsiloxy)hydrogenmethyl(poly)siloxane, mit 3 bis 50 Siloxaneinheiten besonders bevorzugt sind.

Bevorzugt handelt es sich bei den als Komponente (C) eingesetzten Siloxanen der Formel (IX) um niedermolekulare Organo(poly)siloxane mit Organyloxy- und Hydrogengruppen aufweisenden, endständigen Siloxaneinheiten.

Beispiele für die erfindungsgemäßen Siloxane der Formel (IX) sind
α,ω-Bis(hydrogenmethoxymethylsiloxy)dinethyl(poly)siloxane, α,ω-Bis(hydroqenethoxymethylsiloxy)dimethyl(poly)siloxane, α,ω-Bis(hydrogenethoxymethylsiloxy)hydrogennethyl(poly)siloxane und α,ω-Bis(hydrogenethoxymethylsiloxy)hydrogenmethyl/dimethylco(poly)siloxane.

Besonders bevorzugt werden als Organo(poly)siloxane der Formel (IX) solche der Formel 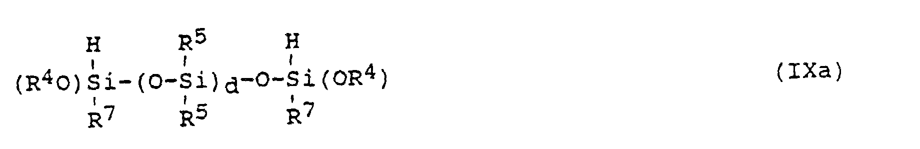 und/oder die entsprechenden Teilhydrolysate und/oder Teilkondensate und/oder deren Umsetzungsprodukte mit R²₃SiOH bzw. R²₃SiOR²₃ eingesetzt, worin R⁴, R⁵ und R⁷ jeweils gleich oder verschieden sein können und eine der obengenannten Bedeutung haben und d eine ganze Zahl zwischen 0 und 1000, insbesondere zwischen 1 und 100 bedeutet, mit der Maßgabe, daß pro Molekül mehr als ein Rest R⁴ die Bedeutung von einwertigem, gegebenenfalls substituierten Kohlenwasserstoffrest hat.

Beispiele für besonders bevorzugt eingesetzte Organo(poly)siloxane der Formel (IX) sind
α,ω-Bis(hydrogenethoxymethylsiloxy)dimethyl(poly)siloxane und α,ω-Bis(hydrogenethoxymethylsiloxy)hydrogenmethyl/dimethylco(poly)siloxane.

Die erfindungsgemäß eingesetzten Organo(poly)siloxane der Formel (IX) besitzen bei einer Temperatur von 23°C eine Viskosität von vorzugsweise 1 bis 100000 mPa·s, besonders bevorzugt von 1 bis 100 mPa·s.

Organo(poly)siloxane mit Organyloxy- und Hydrogengruppen aufweisenden, endständigen Siloxaneinheiten und Verfahren zu deren Herstellung sind bereits aus der internationalen Anmeldung WO-A-91/1637/ bekannt. Die Organo(poly)siloxane der Formel (V) sowie der Formel (IX) können dabei durch Umsetzung von zwei Hydroxylgruppen aufweisenden Organo(poly)siloxanen mit Silan, ausgewählt aus der Gruppe bestehend aus Silan der Formel (IV), Silan der Formel (VIII) sowie deren Gemische, in Gegenwart eines Kondensationskatalysators, wie beispielsweise Carbonsäuren, hergestellt werden.

Diese Umsetzung wird vorzugsweise bei einem Druck von 900 bis 1100 hPa und einer Temperatur von 23 bis 220°C, besonders bevorzugt 100 bis 180°C, durchgeführt, es kann aber auch bei höheren oder niedrigeren Drücken durchgeführt werden.

Beispiele für die erfindungsgemäß als Komponente (C) eingesetzten Organo(poly)siloxane der Formel (X) sind (C₂H₅O)HCH₃Si(OSi(CH₃)₂)_{u'}OC₂H₅, HCH₃Si[(OSi(CH₃)₂)_{u'}OC₂H₅]₂, HCH₃Si[(OSiHCH₃)_{u'}OC₂H₅]₂, (C₂H₅O)HCH₃Si(OSiHCH₃)_{u'}OC₂H₅, wobei u' eine Zahl von 1 bis 1000 ist, deren Gemische sowie alle die Verbindungen der genannten Art, in denen die Ethoxygruppen ganz oder teilweise durch andere Alkyloxygruppen, wie beispielsweise durch Methoxy- oder n-Propoxyreste, oder durch Trimethylsiloxygruppen ausgetauscht sind, mit der Maßgabe, daß durchschnittlich mehr als eine Alkoxygruppe pro Molekül vorhanden ist.

Vorzugsweise haben 0 bis 50 Prozent, insbesondere 40 bis 50 Prozent, der Anzahl der Reste R⁵ die Bedeutung von Wasserstoffatom, wobei ein Siliciumatom nicht mehr als ein Si-gebundenes Wasserstoffatom aufweisen soll.

Die erfindungsgemäß eingesetzten Organo(poly)siloxane der Formel (X) können wie auch die Organo(poly)siloxane der Formel (VI) beispielsweise durch Äquilibrierung von Silanen der Formel (VIII) bzw. Silanen der Formel (IV) mit Siloxanen (1) unter Ausschluß von Wasser hergestellt werden. Als Organo(poly)siloxane (1) werden dabei vorzugsweise solche, ausgewählt aus der Gruppe bestehend aus linearen, endständige Triorganosiloxygruppen aufweisenden Organo(poly)siloxanen der Formel

R⁹ ₃SiO(SiR⁹ ₂O)ᵣSiR⁹ ₃

wobei R⁹ gleich oder verschieden sein kann und eine oben für R¹ angegebene Bedeutung hat und r oder eine ganze Zahl im Wert von 1 bis 2000 ist, wobei die Triorganosiloxyendgruppen im Reaktionsprodukt verbleiben,
linearen, endständige Hydroxylgruppen aufweisenden Organo(poly)siloxanen der Formel

HO(SiR¹⁰ ₂O)ₛH

wobei R¹⁰ gleich oder verschieden sein kann und eine oben für R¹ angegebene Bedeutung hat und s eine ganze Zahl im Wert von 3 bis 2000 ist, und
cyclischen Organopolysiloxanen der Formel

(R¹¹ ₂SiO)ₜ

wobei R¹¹ gleich oder verschieden sein kann und eine oben für R¹ angegebene Bedeutung hat und t eine ganze Zahl von 3 bis 12, bevorzugt 3 bis 7, ist,
eingesetzt.

Die Äquilibrierung findet vorzugsweise in Anwesenheit von Katalysatoren statt. Als Katalysatoren können dabei alle diejenigen Katalysatoren eingesetzt werden, die auch bisher zur Förderung der Äquilibrierung eingesetzt werden konnten.

Beispiele für solche Katalysatoren sind saure Katalysatoren, wie beispielsweise Phosphornitrilchlorid, Trifluormethansulfonsäure, saure Tonerden und Schwefelsäure sowie basische Katalysatoren, wie beispielsweise Benzyltrimethylammoniumhydroxid, Alkalisiloxanolate und Alkalihydroxide, wobei Phosphornitrilchlorid bevorzugt wird.

Katalysator wird dabei vorzugsweise in Mengen von 10 bis 1000 Gew.-ppm (= Teile je Million), insbesondere 20 bis 200 Gew.-ppm, jeweils bezogen auf das Gesamtgewicht der eingesetzten Organosiliciumverbindungen, verwendet.

Die Äquilibrierung wird vorzugsweise bei einer Temperatur von 0°C bis 200°C und einem Druck zwischen 900 und 1100 hPa durchgeführt. Falls erwünscht, können aber auch höhere oder niedrigere Drücke angewendet werden. Vor dem Aufarbeiten des bei dem Äquilibrieren erhaltenen Gemisches wird der Katalysator vorzugsweise unwirksam gemacht.

Des weiteren können die als Komponente (C) erfindungsgemäß eingesetzten Organo(poly)siloxane der Formel (X) wie auch die als Komponente (B) eingesetzten Organo(poly)siloxane der Formel (VI) durch Cohydrolyse der entsprechenden Organyloxy- und/oder Chlorsilane gegebenenfalls in Anwesenheit von Lösungsmittel hergestellt werden. Hierzu sei beispielsweise auf R. Müller, J. prakt. Chem. 9 (1959) 63 verwiesen.

Die erfindungsgemäß eingesetzten Organo(poly)siloxane der Formel (X) haben vorzugsweise 2 bis 100, insbesondere 4 bis 50, Siloxaneinheiten und eine Viskosität von vorzugsweise 2 bis 500 mPa·s, besonders bevorzugt von 3 bis 50 mPa·s.

Bevorzugt handelt es sich bei den Organo(poly)siloxanen der Formel (X) um (C₂H₅O)HCH₃Si[OSi(CH₃)₂)]_{1 bis 49}(OC₂H₅)

In Formel (XI) bedeutet d eine ganze Zahl bevorzugt zwischen 0 und 100, besonders bevorzugt zwischen 0 und 50, e eine ganze Zahl bevorzugt zwischen 0 und 50, besonders bevorzugt zwischen 0 und 10 und f eine ganze Zahl bevorzugt zwischen 0 und 50, besonders bevorzugt zwischen 0 und 20.

Beispiele für die erfindungsgemäß als Komponente (C) eingesetzten Organo(poly)siloxane der Formel (XI) sind 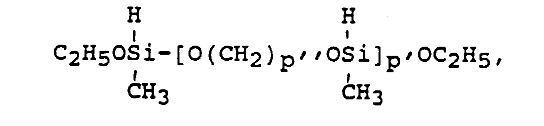 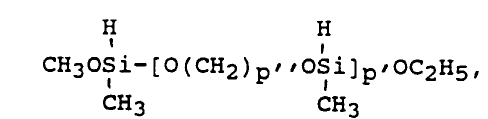 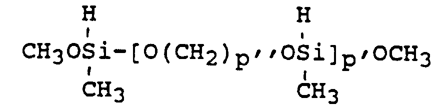 und 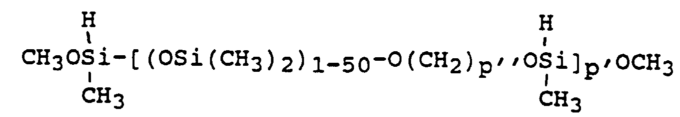 sowie deren Umsetzungsprodukte mit R² ₃SiOH bzw. R² ₃SiOR²₃, wobei R² die obengenannten Bedeutung hat, p'eine Zahl von 1 bis 20 und p" eine Zahl zwischen 2 und 8 ist, mit der Maßgabe, daß pro Molekül durchschnittlich mehr als eine Alkoxygruppe vorhanden ist.

Die Herstellung der Organo(poly)siloxane der Formel (XI) wie auch der Formel (VII) ist vielfach bekannt. Hierzu sei beispielsweise auf R.C. Mehrotra, Indian J. Chem. 5 (1967) 1967 sowie GB-PS 11 84 248 (Dynamit Nobel AG, ausgegeben am 11. März 1970) verwiesen.

Vorzugsweise werden Organo(poly)siloxane der Formel (XI) wie auch Organo(poly)siloxane der Formel (VII) durch Umsetzung von Organosiliciumverbindung (2) mit mindestens zwei Hydroxylgruppen aufweisender, organischer Verbindung (3) gegebenenfalls in Anwesenheit von Brönsted-Säuren hergestellt, wobei der entstehende Alkohol während und/oder nach der Umsetzung abdestilliert wird.

Als Organosiliciumverbindung (2) werden vorzugsweise Silane der Formel (VIII) bzw. der Formel (IV), Organo(poly)siloxane der Formel (IX) bzw. der Formel (V), Organo(poly)siloxane der Formel (X) bzw. der Formel (VI) sowie deren Gemische, deren Teilhydrolysate, deren Teilkondensate und die Umsetzungsprodukte der Teilhydrolysate und Teilkondensate mit R²₃SiOH bzw. R²₃SiOSiR²₃, wobei R² die obengenannte Bedeutung hat, eingesetzt.

Beispiele für mindestens zwei Hydroxylgruppen aufweisende, organische Verbindungen (3) sind lineare, verzweigte und cyclische Alkanole, wie beispielsweise Glykol, 1,3-Propandiol, 1,2-Propandiol, 1,2-Butandiol, 1,3-Butandiol, 1,4-Butandiol, 1,5-Pentandiol, 1,2-Pentandiol, 1,6-Hexandiol, 1,2-Cyclohexandiol, 1,4-Cyclohexandiol, Glycerin, 1,2,4-Butantriol und 1,2,6-Hexantriol, aromatische Alkohole, wie beispielsweise Hydrochinon, Brenzcatechin, Pyrogallol, 4-Hydroxymethylbenzylalkohol, 1,4-Dihydroxynaphthalin und 1,6-Dihydroxynaphthalin sowie Kohlehydrate, wie beispielsweise Glucose und Fructose.

Die Umsetzung wird vorzugsweise bei einer Temperatur von 50°C bis 200°C und einem Druck zwischen 900 und 1100 hPa durchgeführt. Falls erwünscht, können aber auch höhere oder niedrigere Drücke angewendet werden.

Die erfindungsgemäß eingesetzten Organo(poly)siloxane der Formel (XI) haben vorzugsweise 2 bis 100, insbesondere 4 bis 20, Siloxaneinheiten und eine Viskosität von vorzugsweise 2 bis 500 mPa·s, besonders bevorzugt von 5 bis 100 mPa·s.

Bevorzugt handelt es sich bei den Organo(poly)siloxanen der Formel (XI) um 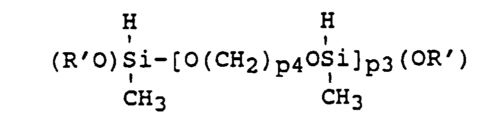 mit R'gleich Alkylrest, wobei 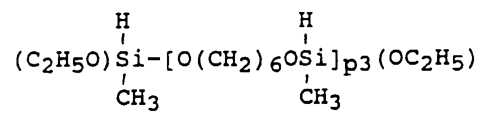 besonders bevorzugt ist und p3 eine Zahl von 2 bis 15 und p4 eine Zahl von 2 bis 6 bedeutet.

Ein weiterer Gegenstand der vorliegenden Erfindung sind Organosiliciumverbindungen der Formel 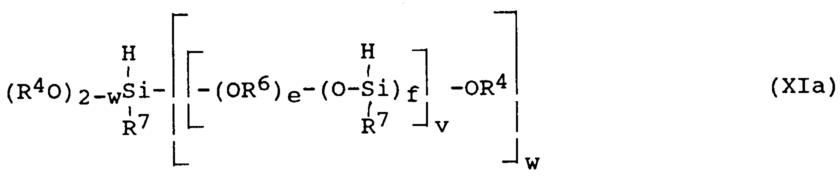 und/oder die entsprechenden Teilhydrolysate und/oder Teilkondensate und/oder die Umsetzungsprodukte dieser Hydrolysate und Kondensate mit R²₃SiOH und/oder R²₃SiOSiR²₃,
wobei
- R⁴: gleich oder verschieden sein kann und einen einwertigen, gegebenenfalls substituierten Kohlenwasserstoffrest oder den Rest -SiR²₃ bedeutet,
- R²: gleich oder verschieden sein kann und die Bedeutung von Wasserstoffatom oder einwertigem, organischen Rest hat,
- R⁶: gleich oder verschieden sein kann und einen zweiwertigen gegebenenfalls substituierten organischen Rest bedeutet,
- R⁷: einen einwertigen, SiC-gebundenen, gegebenenfalls substituierten Kohlenwaserstoffrest mit 1 bis 18 Kohlenstoffatomen bedeutet,
- e: jeweils gleich oder verschieden sein kann und 0 oder eine ganze Zahl zwischen 1 und 100 bedeutet,
- f: jeweils gleich oder verschieden sein kann und 0 oder eine ganze Zahl zwischen 1 und 100 bedeutet,
- v: jeweils gleich oder verschieden sein kann und eine ganze Zahl zwischen 1 und 100 bedeutet und
- w: 1 oder 2 sein kann,
mit der Maßgabe, daß pro Molekül Organosiliciumverbindung durchschnittlich mehr als ein Organyloxyrest R⁴O- mit R⁴ gleich einwertigem, gegebenenfalls substituierten Kohlenwasserstoffrest vorhanden sind und sowohl e als auch f durchschnittlich größer 0 ist.

Teilhydrolysate bzw. Teilkondensate von Verbindungen der Formel (I) und (II) bzw. (IV) bis (XI) sowie deren Umsetzungsprodukte mit R²₃SiOH und/oder R²₃SiOSiR²₃ werden vorzugsweise durch langsame Zugabe von Wasser zu Verbindung der Formel (I) und (II) bzw. (IV) bis (XI) gegebenenfalls im Gemisch mit R²₃SiOH und/oder R²₃SiOSiR²₃, wobei R² die obengenannte Bedeutung hat, sowie gegebenenfalls in Anwesenheit von Brönsted-Säuren hergestellt. Werden Verbindungen der Formel R²₃SiOH und/oder R²₃SiOSiR²₃, wobei R² die obengenannte Bedeutung hat, mitverwendet, können - abhängig von deren Verhältnis zu eingesetzter Verbindung der Formel (IV) bis (XI) - Vergelungsprozesse weitgehend vermieden werden. Anschließend wird der entstandene Alkohol abdestilliert.

Die Herstellung dieser Teilhydrolysate bzw. Teilkondensate sowie deren Umsetzungsprodukte wird vorzugsweise bei einem Druck von 900 bis 1100 hPa und einer Temperatur von 23 bis 220°C, besonders bevorzugt 100 bis 180°C, durchgeführt, es kann aber auch bei höheren oder niedrigeren Drücken durchgeführt werden.

Wenn als Komponente (B) Teilhydrolysate, Teilkondensate, Teilcohydrolysate mit (C), Teilcokondensate mit (C) und/oder Umsetzungsprodukte dieser Hydrolysate und Kondensate von Verbindungen der Formel (I) bzw. (IV) bis (VII) eingesetzt werden, handelt es sich selbstverständlich um solche mit durchschnittlich mehr als zwei Gruppen -OR bzw. -OR⁴ pro Molekül, wobei R bzw. R⁴ einen gegebenenfalls substituierten Kohlenwasserstoffrest bedeutet.

Wenn als Komponente (C) Teilhydrolysate, Teilkondensate und/oder Umsetzungsprodukte dieser Hydrolysate und Kondensate von Verbindungen der Formel (II) bzw. (VIII) bis (XI) eingesetzt werden, handelt es sich selbstverständlich um solche mit durchschnittlich mehr als einer Gruppe -OR⁴ pro Molekül, wobei R⁴ einen gegebenenfalls substituierten Kohlenwasserstoffrest bedeutet.

Vorzugsweise handelt es sich bei den erfindungsgemäßen, unter Abspaltung von Alkoholen zu Elastomeren vernetzbaren Organo(poly)siloxanmassen um solche, die herstellbar sind aus, jeweils bezogen auf das Gesamtgewicht der Organo(poly)siloxanmasse,
(A) 20 bis 98 Gewichtsprozent, bevorzugt 40 bis 80 Gewichtsprozent, besonders bevorzugt 30 bis 70 Gewichtsprozent, α,ω-Dihydroxyorqano(poly) siloxan,
(B) 1 bis 50 Gewichtsprozent, bevorzugt 2 bis 30 Gewichtsprozent, besonders bevorzugt 3 bis 20 Gewichtsprozent, Organosiliciumverbindung der Formel (I),
(C) 0 bis 50 Gewichtsprozent, bevorzugt 1 bis 20 Gewichtsprozent, besonders bevorzugt 2 bis 5 Gewichtsprozent, Organosiliciumverbindung der Formel (II),
(D) 0 bis 70 Gewichtsprozent, bevorzugt 1 bis 60 Gewichtsprozent, besonders bevorzugt 5 bis 50 Gewichtsprozent, Füllstoff,
(E) 0 bis 70 Gewichtsprozent, bevorzugt 0 bis 60 Gewichtsprozent, besonders bevorzugt 10 bis 50 Gewichtsprozent, Weichmacher,
(F) 0 bis 20 Gewichtsprozent, bevorzugt 0 bis 10 Gewichtsprozent, besonders bevorzugt 1 bis 8 Gewichtsprozent, Haftvermittler,
(G) 0 bis 20 Gewichtsprozent, bevorzugt 0 bis 10 Gewichtsprozent, besonders bevorzugt 1 bis 8 Gewichtsprozent, Scavenger,
(H) 0 bis 10 Gewichtsprozent, bevorzugt 0,01 bis 5 Gewichtsprozent, besonders bevorzugt 0,1 bis 3 Gewichtsprozent, Kondensationskatalysator und
(K) 0 bis 50 Gewichtsprozent, bevorzugt 0,5 bis 10 Gewichtsprozent, besonders bevorzugt 1 bis 7 Gewichtsprozent, Additive,
mit der Maßgabe, daß mindestens eine der Komponenten (D), (E) und (F) verwendet wird, falls Komponente (B) gleich Silan der Formel (IV) ist.

Durch den Zusatz von als Kettenverlängerer wirkender Organosiliciumverbindung der Formel (II) können die mechanischen Eigenschaften der unter Abspaltung von Alkoholen zu Elastomeren vernetzten Organo(poly)siloxanmassen in weiten Bereichen variiert werden. Abhängig von der Menge an Organosiliciumverbindung der Formel (II) in der erfindungsgemäßen Masse kann dabei der Weichmacheranteil in der erfindungsgemäßen Masse reduziert bzw. auf Weichmacher völlig verzichtet werden.

Die in den erfindungsgemäßen Organo(poly)siloxanmassen eingesetzten Füllstoffe (D), Weichmacher (E), Haftvermittler (F), Scavenger (G), Kondensationskatalysator (H) und Additive (K) können jeweils die gleichen sein, die auch bisher in unter Abspaltung von Alkoholen zu Elastomeren vernetzbaren Organo(poly)siloxanmassen verwendet werden konnten, wobei basisch wirkende Bestandteile weniger geeignet sind, da sie die Lagerstabilität der Organo(poly)siloxanmassen herabsetzen.

Beispiele für Füllstoffe (D) sind beispielsweise nicht verstärkende Füllstoffe, also Füllstoffe mit einer BET-Oberfläche von bis zu 50 m²/g, wie Quarz, Diatomeenerde, Calciumsilikat, Zirkoniumsilikat, Zeolithe, Metalloxidpulver, wie Aluminium-, Titan-, Eisen- oder Zinkoxide bzw. deren Mischoxide, Bariumsulfat, Calciumcarbonat, Gips, Siliciumnitrid, Siliciumcarbid, Bornitrid, Glas- und Kunststoffpulver, wie Polyacrylnitrilpulver; verstärkende Füllstoffe, also Füllstoffe mit einer BET-Oberfläche von mehr als 50 m²/g, wie pyrogen hergestellte Kieselsäure, gefällte Kieselsäure, Ruß, wie Furnace- und Acetylenruß und Silicium-Aluminium-Mischoxide großer BET-Oberfläche; faserförmige Füllstoffe, wie Asbest sowie Kunststoffasern. Die genannten Füllstoffe können hydrophobiert sein, beispielsweise durch die Behandlung mit Organosilanen bzw. -siloxanen oder mit Stearinsäure oder durch Veretherung von Hydroxylgruppen zu Alkoxygruppen.

Beispiele für Weichmacher (E) sind beispielsweise bei Raumtemperatur flüssige, durch Trimethylsiloxygruppen endblockierte Dimethylpolysiloxane sowie hochsiedende Kohlenwasserstoffe, wie zum Beispiel Paraffinöle.

Beispiele für die in den erfindungsgemäßen Organo(poly)siloxanmassen eingesetzten Haftvermittler (F) sind Silane und Organo(poly)siloxane mit funktionellen Gruppen, wie beispielsweise solche mit Aminoalkyl-, Glycidoxypropyl- oder Methacryloxypropylresten sowie Tetraalkoxysilane.

Als Scavenger (G) sind alle Verbindungen geeignet, die in der Lage sind, die Lagerstabilität der erfindungsgemäßen Organo(poly)siloxanmassen herabsetzende Moleküle, wie beispielsweise Wasser, Alkohol oder Silanole, abzufangen.

Beispiele für solche Scavenger (G) sind Silane der Formel

R¹² _{4-g}SiZ_{g} (XII)

worin R¹² gleich oder verschieden sein kann und eine der Bedeutungen von R⁷ hat, Z eine leicht abspaltbare Gruppe bedeutet, wie beispielweise 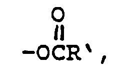 -NR"₂ und -OR‴, wobei R', R" und R‴ jeweils gleich oder verschieden sein können und einen organischen Rest bedeuten, g 1, 2, 3 oder 4 ist, wie beispielsweise Triacetoxymethylsilan, Di(N-methylacetamido)dimethylsilan und Diacetoxydimethylsilan, sowie Carbonsäureanhydride, Carbonsäureester, Isocyanate und Molekularsiebe. Insbesondere zum Abfangen von molekularem Wasserstoff eignen sich als Scavenger ungesättigte organische Verbindungen gemäß US-PS 4,489,191 (General Electric Company; ausgegeben am 18. Dezember 1989).

Beispiele für Kondensationskatalysator (H) (Organo)Metallverbindungen, wie beispielsweise Titanate, organische Zinnverbindungen, Zink- und Cobaltverbindungen, saure, von Metallatomen freie Katalysatoren, wie z.B. Carbonsäuren, und basische, von Metallatomen freie Katalysatoren, wie z.B. Amin.

Bevorzugt unter diesen Kondensationskatalysatoren sind saure, von Metallatomen freie Katalysatoren, wie beispielsweise Carbonsäuren, wobei Carbonsäuren, wie beispielsweise Hexansäure, 2-Ethylhexansäure, Laurinsäure, Malonsäure und Ölsäure, besonders bevorzugt eingesetzt werden.

Des weiteren können als Bestandteil (H) auch Verbindungen eingesetzt werden, die erst bei Zutritt von Wasser ihre Wirkung als saure Katalysatoren entfalten, wie beispielsweise Carbonsäureanhydride und Acyloxysilane, wie etwa Acetoxysilane.

Beispiele für Additive (K) sind Pigmente, Farbstoffe, Riechstoffe, Fungicide, Oxydationsinhibitoren, Mittel zur Beeinflussung der elektrischen Eigenschaften, wie leitfähiger Ruß, flammabweisend machende Mittel, Lichtschutzmittel und Mittel zur Verlängerung der Hautbildungszeit, wie Silane mit einem SiC-gebundenen Mercaptoalkylrest, zellenerzeugende Mittel, z.B. Azodicarbonamid, Hitzestabilisatoren und Thixotropiermittel.

Darüberhinaus können in den erfindungsgemäßen Organo(poly)siloxanmassen noch andere Bestandteile als die Bestandteile (A) bis (K) eingesetzt werden. Dies können die gleichen sein, die auch bisher in unter Abspaltung von Alkoholen zu Elastomeren vernetzbaren Organo(poly)siloxanmassen verwendet werden konnten, wobei basisch wirkende Bestandteile weniger geeignet sind, da sie die Lagerstabilität der Organo(poly)siloxanmassen herabsetzen.

Beispiele für solche anderen Bestandteile sind Silane der Formel

R¹³ ₘSi(OR¹⁴)₄₋ₘ (XIII)

worin R¹³ eine für R⁷ angegebene Bedeutung hat, R¹⁴ eine für R angegebene Bedeutung hat und m 0 oder 1 ist, oder deren Teilhydrolysate bzw. Teilkondensate, wie Hexamethoxydisiloxan, harzartige Organopolysiloxane, einschließlich solcher aus R¹³ ₃SiO_{1/2}- und SiO_{4/2}-Einheiten mit R¹³ gleich eine der oben dafür angegebenen Bedeutung, rein-organische Harze, wie Homo- oder Mischpolymerisate des Acrylnitrils, Styrols, Vinylchlorids oder Propylens, Korrosionsinhibitoren, Polyglykole, die verestert und/oder verethert sein können, Lösungsmittel sowie Gemische aus mindestens zwei Arten derartiger Bestandteile.

Bei den einzelnen Bestandteilen (D), (E), (F), (G), (H) und (K) der erfindungsgemäßen unter Abspaltung von Alkoholen vernetzbaren Organo(poly)siloxanmassen kann es sich jeweils um eine Art derartiger Bestandteile wie auch um ein Gemisch aus mindestens zwei Arten derartiger Bestandteile handeln.

Zur Bereitung der erfindungsgemäßen Massen können alle Bestandteile der jeweiligen Masse in beliebiger Reihenfolge miteinander vermischt werden. Dieses Vermischen kann bei Raumtemperatur und dem Druck der umgebenden Atmosphäre, also etwa 900 bis 1100 hPa erfolgen. Falls erwünscht, kann dieses Vermischen aber auch bei höheren Temperaturen erfolgen, z.B. bei Temperaturen im Bereich von 35°C bis 135°C. Vorzugsweise wird bei diesem Vermischen der Zutritt von Wasser soweit wie möglich ausgeschlossen.

Ein weiterer Gegenstand der Erfindung ist ein Verfahren zur Herstellung von unter Abspaltung von Alkoholen zu Elastomeren vernetzbaren Organo(poly)siloxanmassen, dadurch gekennzeichnet, daß, jeweils bezogen auf das Gesamtgewicht der Organo(poly)siloxanmasse,
(A) 20 bis 98 Gewichtsprozent α,ω-Dihydroxyorgano(poly)siloxan,
(B) 1 bis 50 Gewichtsprozent Organosiliciumverbindung der Formel (I),
(C) 0 bis 50 Gewichtsprozent Organosiliciumverbindung der Formel (II),
(D) 0 bis 70 Gewichtsprozent Füllstoff,
(E) 0 bis 70 Gewichtsprozent Weichmacher,
(F) 0 bis 20 Gewichtsprozent Haftvermittler,
(G) 0 bis 20 Gewichtsprozent Scavenger,
(H) 0 bis 10 Gewichtsprozent Kondensationskatalysator und
(K) 0 bis 50 Gewichtsprozent Additive,
mit der Maßgabe, daß für den Fall in Formel (I) x = 0 und/oder a=b=c=0 Organosiliciumverbindung (C) der allgemeinen Formel (II) mit v verschieden 0 und (d+e+f) verschieden 0 mitverwendet wird,

sowie gegebenenfalls weitere Stoffe in beliebiger Reihenfolge miteinander vermischt werden, die Mischung in einer 1. Stufe bei einer Temperatur von 15 bis 80 °C und einem Druck von 900 bis 1 100 hPa für eine Dauer von 5 bis 90 Minuten gerührt und anschließend in einer 2. Stufe bei einem Druck von 0,01 bis 100 hPa für eine Dauer von 3 bis 60 Minuten weitergerührt wird, wobei die Rührgeschwindigkeit so gewählt wird, daß sich die Temperatur der Masse während des Rührens ohne weitere Wärmezufuhr auf einen Wert innerhalb des Temperaturbereiches von 15°C und 80°C erhöht.

Bei den im erfindungsgemäßen Verfahren gegebenenfalls eingesetzten weiteren Stoffen kann es sich um die gleichen handeln, die auch bisher in den unter Abspaltung von Alkoholen zu Elastomeren vernetzbaren Organo(poly)siloxanmassen eingesetzt werden konnten, wobei basisch wirkende Bestandteile weniger geeignet sind, da sie die Lagerstabilität herabsetzen. Insbesondere handelt es sich dabei um die für die Bestandteile (C), (D), (E), (F), (G), (H), (K) sowie für die darüberhinaus einsetzbaren anderen Bestandteile oben angegebenen Beispiele.

Bei einer bevorzugten Ausführungsform des erfindungsgemäßen Verfahrens werden, jeweils bezogen auf das Gesamtgewicht der Organo(poly)siloxanmasse,
(A) 20 bis 98 Gewichtsprozent α,ω-Dihydroxyorgano(poly)siloxan,
(B) 1 bis 50 Gewichtsprozent Organosiliciumverbindung der Formel (I),
(C) 1 bis 20 Gewichtsprozent Organosiliciumverbindung der Formel (II),
(D) 0 bis 70 Gewichtsprozent Füllstoff,
(E) 0 bis 70 Gewichtsprozent Weichmacher,
(F) 0 bis 20 Gewichtsprozent Haftvermittler,
(G) 0 bis 20 Gewichtsprozent Scavenger,
(H) 0 bis 10 Gewichtsprozent Kondensationskatalysator und
(K) 0 bis 50 Gewichtsprozent Additive,
mit der Maßgabe, daß mindestens eine der Komponenten (D), (E) und (F) verwendet wird, falls Komponente (B) gleich Silan der Formel (IV) ist,
sowie gegebenenfalls weitere Stoffe in beliebiger Reihenfolge miteinander vermischt werden, die Mischung in einer 1. Stufe bei einer Temperatur von 15 bis 80 °C und einem Druck von vorzugsweise 900 bis 1 100 hPa für eine Dauer von 5 bis 90 Minuten gerührt und anschließend in einer 2. Stufe bei einem Druck von 0,01 bis 100 hPa für eine Dauer von 3 bis 60 Minuten weitergerührt wird, wobei die Rührgeschwindigkeit so gewählt wird, daß sich die Temperatur der Masse während des Rührens ohne weitere Wärmezufuhr auf einen Wert innerhalb des Temperaturbereiches von 15°C und 80°C erhöht.

Für die Vernetzung der erfindungsgemäßen bzw. erfindungsgemäß hergestellten Massen reicht der übliche Wassergehalt der Luft aus. Die Vernetzung kann, falls erwünscht, auch bei höheren oder niedrigeren Temperaturen als Raumtemperatur, z.B. bei -5° bis 10°C oder bei 30° bis 50°C durchgeführt werden.

Die erfindungsgemäßen bzw. erfindungsgemäß hergestellten, unter Abspaltung von Alkoholen zu Elastomeren vernetzbaren Organo(poly)siloxanmassen haben den Vorteil, daß sie sich durch eine hohe Vernetzungsgeschwindigkeit und eine hohe Lagerstabilität auszeichnen. So zeigen diese Massen bei einer Lagerung von mehr als zwölf Monaten bei Raumtemperatur zu jedem Zeitpunkt ein konstantes Vulkanisationsverhalten.

Außerdem können die mechanischen Eigenschaften der unter Abspaltung von Alkoholen zu Elastomeren vernetzten Organo(poly)siloxanmassen durch geeignete Wahl der einzelnen Bestandteile, insbesondere bei dem Einsatz von Komponente (C), in den erfindungsgemäßen bzw. erfindungsgemäß hergestellten Massen auf relativ einfache Weise in weiten Bereichen variiert werden. Des weiteren haben die nach dem erfinungsgemäßen Verfahren hergestellten Organo(poly)siloxanmassen den Vorteil, daß sie selbst bei einer Lagerung von über zwölf Monaten bei Raumtemperatur keine Wasserstoffentwicklung zeigen.

Ein weiterer Vorteil der erfindungsgemäßen bzw. erfindungsgemäß hergestellten, unter Abspaltung von Alkoholen zu Elastomeren vernetzbaren Organo(poly)siloxanmassen ist, daß sie auch ohne Metallkatalysatoren, die in vielen Fällen aus toxikologischer Sicht bedenklich sind, nur unter Verwendung von milden Kondensationskatalysatoren sehr schnell zu Elastomeren aushärten.

Die erfindungsgemäßen bzw. erfindungsgemäß hergestellten Massen können für alle Verwendungszwecke eingesetzt werden, für die unter Ausschluß von Wasser lagerfähige, bei Zutritt von Wasser bei Raumtemperatur zu Elastomeren vernetzende Organo(poly)siloxanmassen eingesetzt werden können.

Die erfindungsgemäßen bzw. erfindungsgemäß hergestellten Massen eignen sich somit ausgezeichnet beispielsweise als Abdichtmassen für Fugen, einschließlich senkrecht verlaufender Fugen, und ähnlichen Leerräumen von z.B. 10 bis 40 mm lichter Weite, z.B. von Gebäuden, Land-, Wasser- und Luftfahrzeugen, oder als Klebstoffe oder Verkittungsmassen, z.B. im Fensterbau oder bei der Herstellung von Aquarien oder Vitrinen, sowie z.B. zur Herstellung von Schutzüberzügen, einschließlich solcher für der ständigen Einwirkung von Süß- oder Meerwasser ausgesetzte Oberflächen, oder das Gleiten verhindernden Überzügen, oder von gummielastischen Formkörpern sowie für die Isolierung von elektrischen oder elektronischen Vorrichtungen.

In den nachstehend beschriebenen Beispielen beziehen sich alle Viskositätsangaben auf eine Temperatur von 25°C. Sofern nicht anders angegeben, werden die nachstehenden Beispiele bei einem Druck der umgebenden Atmosphäre, also etwa bei 1000 hPa, und bei Raumtemperatur, also bei etwa 23°C, bzw. bei einer Temperatur, die sich beim Zusammengeben der Reaktanden bei Raumtemperatur ohne zusätzliche Heizung oder Kühlung einstellt, durchgeführt. Des weiteren beziehen sich alle Angaben von Teilen und Prozentsätzen, soweit nichts anderes angegeben ist, auf das Gewicht.

In den folgenden Beispielen werden Shore-A-Härte nach DIN (Deutsche Industrie Norm) 53 505-87, die Reißfestigkeit, die Reißdehnung sowie das Modul (Zugfestigkeit nach 100 % Dehnung) jeweils nach DIN 53504-85S1 und die Weiterreißfestigkeit nach ASTM D624B-73 bestimmt.

Das numerische Mittel Mₙ sowie das Gewichtsmittel M_{w} werden mit Hilfe von Gelpermeationschromatographie bestimmt.

Ferner werden die folgenden Abkürzungen verwendet:
- Me : Methylgruppe,
- Et : Ethylgruppe,
- U/min : Umdrehungen/Minute,
- Siloxan A : α,ω-Dihydroxydimethylpolysiloxan mit einer Viskosität von etwa 80 000 mPa·s und durchschnittlich 900 bis 1 000 Dimethylsiloxyeinheiten,
- Siloxan B : α,ω-Di(trimethylsiloxy)dimethylpolysiloxan mit einer Viskosität von etwa 100 mPa·s,
- Siloxan C : α,ω-Di(trimethylsiloxy)dimethylpolysiloxan mit einer Viskosität von etwa 1000 mPa·s,
- Siloxan D : α,ω-Dihydroxydimethylpolysiloxan mit einer Viskosität von etwa 350 000 mPa·s und durchschnittlich 1 500 bis 1 600 Dimethylsiloxyeinheiten.

### Beispiel 1

In einem 5 l Planetenmischer (Typ FH6-S der Fa. Drais-Werke GmbH, D-6800 Mannheim) werden unter Luftausschluß 51,5 Teile Siloxan A, 30 Teile Siloxan B, 5,2 Teile Hydrogentriethoxysilan, 0,4 Teile Ölsäure sowie 12 Teile pyrogene Kieselsäure (erhältlich als HDK H 15 von der Wacker-Chemie GmbH, D-8000 München) innerhalb von 40 Minuten mit einer Drehzahl von 160 U/min bei einer Temperatur von 40 bis 50 °C vermischt, wobei im Anschluß daran die Mischung weitere 10 Minuten mit einer Drehzahl von 160 U/min bei einem Druck von 0,1 bis 1,5 kPa gerührt wird. Die so erhaltene Masse wird unter Feuchtigkeitsausschluß in Tuben abgefüllt und bei einer Temperatur von 50°C gelagert. In einem Beobachtungszeitraum von mehreren Monaten ist keine Veränderung der Masse und keine Wasserstoffentwicklung in der Tube zu beobachten.

Aus der so erhaltenen Masse werden nach einem Tag Lagerung 2 mm dicke Filme erzeugt, indem die Masse mit einer Spachtel auf eine Oberfläche aus Polytetrafluorethylen aufgetragen und der Luftfeuchtigkeit ausgesetzt wird. Die Zeit bis zur Ausbildung einer trockenen Oberfläche (Hautbildungszeit) wird bestimmt. Zwei Wochen nach dem Auftragen werden die entstandenen trockenen Filme auf ihre mechanischen Eigenschaften hin untersucht. Angaben über die Hautbildungszeit und die mechanischen Eigenschaften finden sich in Tabelle 1.

### Beispiel 2

In einem 5 l Planetenmischer (Typ FH6-S der Fa. Drais-Werke GmbH, D-6800 Mannheim) werden unter Luftausschluß 51,0 Teile Siloxan A, 30 Teile Siloxan B, 6,0 Teile Hydrogentriethoxysilan, 0,6 Teile Ölsäure, 35 Teile Dolomit (erhältlich unter der Bezeichnung Microdol S bei Norwegian Talc Minerals A.S., N-5355 Knarrevik) sowie 12 Teile pyrogene Kieselsäure (erhältlich als HDK H 15 von der Wacker-Chemie GmbH, D-8000 München) innerhalb von 40 Minuten mit einer Drehzahl von 160 U/min bei einer Temperatur von 40 bis 50 °C vermischt, wobei im Anschluß daran die Mischung weitere 10 Minuten mit einer Drehzahl von 160 U/min bei einem Druck von 0,1 bis 1,5 kPa gerührt wird. Des weiteren wird wie in Beispiel 1 beschrieben verfahren.

In einem Beobachtungszeitraum von mehreren Monaten ist keine Veränderung der Masse und keine Wasserstoffentwicklung in der Tube zu beobachten. Angaben über die Hautbildungszeit und die mechanischen Eigenschaften finden sich in Tabelle 1.

### Beispiel 3

In einem 5 l Planetenmischer (Typ FH6-S der Fa. Drais-Werke GmbH, D-6800 Mannheim) werden unter Luftausschluß 51,0 Teile Siloxan A, 30 Teile Siloxan B, 6,0 Teile Hydrogentriethoxysilan, 0,6 Teile Ölsäure, 60 Teile Kreide (erhältlich unter der Bezeichnung Omya BLR/3 bei der Omya GmbH, D-5000 Köln) sowie 15 Teile pyrogene Kieselsäure (erhältlich als HDK H 15 von der Wacker-Chemie GmbH, D-8000 München) innerhalb von 40 Minuten mit einer Drehzahl von 160 U/min bei einer Temperatur von 40 bis 50 °C vermischt, wobei im Anschluß daran die Mischung weitere 10 Minuten mit einer Drehzahl von 160 U/min bei einem Druck von 0,1 bis 1,5 kPa gerührt wird. Des weiteren wird wie in Beispiel 1 beschrieben verfahren.

In einem Beobachtungszeitraum von mehreren Monaten ist keine Veränderung der Masse und keine Wasserstoffentwicklung in der Tube zu beobachten. Angaben über die Hautbildungszeit und die mechanischen Eigenschaften finden sich in Tabelle 1.

### Beispiel 4

Die in Beispiel 2 beschriebene Verfahrensweise wird wiederholt mit der Abänderung, daß zusätzlich jeweils 1,35 Teile der folgenden Substanzen zugesetzt werden:
- Beispiel 4 a:: 3-Triethoxysilylpropylbernsteinsäureanhydrid (erhältlich bei der Wacker-Chemie GmbH, D-8000 München unter der Bezeichnung GF 20)
- Beispiel 4 b:: Essigsäureanhydrid
- Beispiel 4 c:: Triacetoxymethylsilan

In einem Beobachtungszeitraum von mehreren Monaten ist keine Veränderung der Masse und keine Wasserstoffentwicklung in der Tube zu beobachten. Angaben über die Hautbildungszeit und die mechanischen Eigenschaften finden sich in Tabelle 1.

### Beispiel 5

In einem 5 l Planetenmischer (Typ FH6-S der Fa. Drais-Werke GmbH, D-6800 Mannheim) werden unter Luftausschluß 51,5 Teile Siloxan A, 30 Teile Siloxan B, 5,2 Teile Hydrogentriethoxysilan, 0,3 Teile 2-Ethylhexansäure sowie 16 Teile pyrogene Kieselsäure (erhältlich als HDK H 15 von der Wacker-Chemie GmbH, D-8000 München) innerhalb von 40 Minuten mit einer Drehzahl von 160 U/min bei einer Temperatur von 40 bis 50 °C vermischt, wobei im Anschluß daran die Mischung weitere 10 Minuten mit einer Drehzahl von 160 U/min bei einem Druck von 0,1 bis 1,5 kPa gerührt wird. Des weiteren wird wie in Beispiel 1 beschrieben verfahren.

In einem Beobachtungszeitraum von mehreren Monaten ist keine Veränderung der Masse und keine Wasserstoffentwicklung in der Tube zu beobachten. Angaben über die Hautbildungszeit und die mechanischen Eigenschaften finden sich in Tabelle 1.

Zur Ermittlung des Haftvermögens wird jeweils ein Teil der so erhaltenen Masse auf die in Tabelle 2 angegebenen, von Verunreinigungen, wie Staub und Fett, befreiten Substrate aufgetragen und unter Umgebungsbedingungen vernetzen gelassen. Zwei Wochen nach dem Auftragen werden die entstandenen trockenen Elastomere von dem jeweiligen Substrat gelöst. Die Ergebnisse finden sich in Tabelle 2.

### Beispiel 6

Die in Beispiel 5 beschriebene Verfahrensweise wird wiederholt mit der Abänderung, daß zusätzlich jeweils 1,6 Teile der folgenden Substanzen zugesetzt werden:
- Beispiel 6 a:: 3-Glycidoxypropyltriethoxysilan (erhältlich bei der Wacker-Chemie GmbH, D-8000 München unter der Bezeichnung GF 82)
- Beispiel 6 b:: 3-Methacryloxypropyltrimethoxysilan (erhältlich bei der Wacker-Chemie GmbH, D-8000 München unter der Bezeichnung GF 31)
- Beispiel 6 c:: 3-Triethoxysilylpropylbernsteinsäureanhydrid (erhältlich bei der Wacker-Chemie GmbH, D-8000 München unter der Bezeichnung GF 20)

In einem Beobachtungszeitraum von mehreren Monaten ist keine Veränderung der Masse und keine Wasserstoffentwicklung in der Tube zu beobachten. Angaben über die Hautbildungszeit und die mechanischen Eigenschaften finden sich in Tabelle 1.

Ergebnisse über das Haftvermögen sind in Tabelle 2 angeführt.

**Tabelle 1**

| Beispiel | Reißfestigkeit (N/mm²) | Reißdehnung (%) | Modul (N/mm²) | Shore-A-Härte | Weiterreißfestigkeit (N/mm) | t₁ in min |
|---|---|---|---|---|---|---|
| 1 | 2,2 | 420 | 0,5 | 23 | 6,0 | 15 |
| 2 | 2,1 | 360 | 0,8 | 31 | 8,8 | 18 |
| 3 | 1,9 | 410 | 0,6 | 33 | 6,8 | 10 |
| 4a | 2,5 | 400 | 0,8 | 38 | 9,7 | 5 |
| 4b | 2,4 | 410 | 0,8 | 33 | 9,0 | 17 |
| 4c | 1,8 | 340 | 0,7 | 33 | 8,5 | 6 |
| 5 | 2,6 | 330 | 0,8 | 36 | 7,7 | 5 |
| 6a | 2,0 | 290 | 0,8 | 35 | 9,0 | 5 |
| 6b | 2,6 | 370 | 0,8 | 34 | 8,4 | 8 |
| 6c | 3,0 | 420 | 0,9 | 40 | 10,1 | 3 |

**Tabelle 2**

| Beispiel | Beton | Aluminium | Eisen | Glas | Keramik | Holz¹⁾ | Holz²⁾ |
|---|---|---|---|---|---|---|---|
| 5 | A | A | A | K | K | A | AK |
| 6a | A | K | K | K | K | A | K |
| 6b | A | K | K | K | K | A | K |
| 6c | K | K | K | K | K | A | K |

| | | | | | | | |
|---|---|---|---|---|---|---|---|
| 1) roh | | | | | | | |
| 2) lasiert A: das Elastomer löst sich vom Substrat K: das Elastomer reißt beim Ablösen AK: sowohl Fall A als auch K tritt ein | | | | | | | |

### Beispiel 7

In einem 5 l Planetenmischer (Typ FH6-S der Fa. Drais-Werke GmbH, D-6800 Mannheim) werden unter Luftausschluß 51,5 Teile Siloxan A, 0,3 Teile Ölsäure und die in Tabelle 3 angegebene Menge an Hydrogendiethoxymethylsilan 15 Minuten unter Stickstoffatmosphäre vermischt. Anschließend werden dann 30 Teile Siloxan B, die in Tabelle 3 angegebene Menge an Hydrogentriethoxysilan sowie 12 Teile pyrogene Kieselsäure (erhältlich als HDK H 15 von der Wacker-Chemie GmbH, D-8000 München) hinzugegeben und innerhalb von 30 Minuten mit einer Drehzahl von 160 U/min bei einer Temperatur von 40 bis 50 °C innig vermischt, wobei im Anschluß daran die Mischung weitere 10 Minuten mit einer Drehzahl von 160 U/min bei einem Druck von 0,1 bis 1,5 kPa gerührt wird. Des weiteren wird wie in Beispiel 1 beschrieben verfahren.

**Tabelle 3**

| Beispiel | Hydrogendiethoxymethylsilan (Teile) | Hydrogentriethoxysilan (Teile) |
|---|---|---|
| 7a | - | 6,0 |
| 7b | 1,0 | 5,0 |
| 7c | 2,0 | 4,0 |
| 7d | 3,0 | 3,0 |
| 7f | 4,0 | 2,0 |

In einem Beobachtungszeitraum von mehreren Monaten ist keine Veränderung der Masse und keine Wasserstoffentwicklung in der Tube zu beobachten. Angaben über die Hautbildungszeit und die mechanischen Eigenschaften finden sich in Tabelle 4.

### Beispiel 8

In einem 5 l Planetenmischer (Typ FH6-S der Fa. Drais-Werke GmbH, D-6800 Mannheim) werden unter Luftausschluß 51,5 Teile Siloxan A und die in Tabelle 5 angegebene Menge an Hydrogendiethoxymethylsilan 15 Minuten unter Stickstoffatmosphäre vermischt. Anschließend werden dann 30 Teile Siloxan B, die in Tabelle 5 angegebene Menge an Hydrogentriethoxysilan, 0,6 Teile ölsäure, 35 Teile Dolomit (erhältlich unter der Bezeichnung Microdol S bei Norwegian Talc Minerals A.S., N-5355 Knarrevik) sowie 12 Teile pyrogene Kieselsäure (erhältlich als HDK H 15 von der Wacker-Chemie GmbH, D-8000 München) hinzugegeben und innerhalb von 30 Minuten mit einer Drehzahl von 160 U/min bei einer Temperatur von 40 bis 50 °C innig vermischt, wobei im Anschluß daran die Mischung weitere 10 Minuten mit einer Drehzahl von 160 U/min bei einem Druck von 0,1 bis 1,5 kPa gerührt wird. Des weiteren wird wie in Beispiel 1 beschrieben verfahren.

**Tabelle 5**

| Beispiel | Hydrogendiethoxymethylsilan (Teile) | Hydrogentriethoxysilan (Teile) |
|---|---|---|
| 8a | - | 6,0 |
| 8b | 3,0 | 3,0 |
| 8c | 4,0 | 2,0 |

In einem Beobachtungszeitraum von mehreren Monaten ist keine Veränderung der Masse und keine Wasserstoffentwicklung in der Tube zu beobachten. Angaben über die Hautbildungszeit und die mechanischen Eigenschaften finden sich in Tabelle 4.

### Beispiel 9

In einem 5 l Planetenmischer (Typ FH6-S der Fa. Drais-Werke GmbH, D-6800 Mannheim) werden unter Luftausschluß 70,0 Teile α,ω-Dihydroxydimethylpolysiloxans mit einer Viskosität von etwa 20 000 mPa·s und durchschnittlich 600 bis 700 Dimethylsiloxyeinheiten und 7,00 Teile Hydrogendiethoxymethylsilan 15 Minuten unter Stickstoffatmosphäre vermischt.
Anschließend werden dann 1,40 Teile Hydrogentriethoxysilan, 1,20 Teile Ölsäure, 35 Teile Dolomit (erhältlich unter der Bezeichnung Microdol S bei Norwegian Talc Minerals A.S., N-5355 Knarrevik) sowie 13 Teile pyrogene Kieselsäure (erhältlich als HDK H 15 von der Wacker-Chemie GmbH, D-8000 München) hinzugegeben und innerhalb von 30 Minuten mit einer Drehzahl von 160 U/min bei einer Temperatur von 40 bis 50 °C innig vermischt, wobei im Anschluß daran die Mischung weitere 10 Minuten mit einer Drehzahl von 160 U/min bei einem Druck von 0,1 bis 1,5 kPa gerührt wird. Des weiteren wird wie in Beispiel 1 beschrieben verfahren.

In einem Beobachtungszeitraum von mehreren Monaten ist keine Veränderung der Masse und keine Wasserstoffentwicklung in der Tube zu beobachten. Angaben über die Hautbildungszeit und die mechanischen Eigenschaften finden sich in Tabelle 4.

**Tabelle 4**

| Beispiel | Reißfestigkeit (N/mm²) | Reißdehnung (%) | Modul (N/mm²) | Shore-A-Härte | Weiterreißfestigkeit (N/mm) | t₁ in min |
|---|---|---|---|---|---|---|
| 7a | 2,0 | 350 | 0,6 | 25 | 6,9 | 12 |
| 7b | 1,3 | 310 | 0,4 | 22 | 5,7 | 17 |
| 7c | 1,3 | 350 | 0,4 | 21 | 6,0 | 22 |
| 7d | 1,3 | 460 | 0,3 | 15 | 5,5 | 22 |
| 7f | 1,5 | 550 | 0,2 | 13 | 4,9 | 30 |
| 8a | 2,1 | 360 | 0,8 | 31 | 8,8 | 18 |
| 8b | 1,9 | 390 | 0,6 | 27 | 8,6 | 17 |
| 8c | 1,4 | 680 | 0,3 | 18 | 8,5 | 20 |
| 9 | 2,1 | 620 | 0,6 | 29 | 9,6 | 15 |

### Beispiel 10

### Polymer 1

An einem Rotationsverdampfer werden 72,1 g α,ω-Dihydroxydimethylsiloxan mit durchschnittlich 13 Dimethylsiloxyeinheiten, 65,7 g Hydrogentriethoxysilan (Silicon Compounds Register and Review; Petrarch Systems: Silane and Silicones, ABCR Karlsruhe GmbH und Co., D-7500 Karlsruhe) und 1,38 g wasserfreies Aceton 45 Minuten unter Ausschluß von Feuchtigkeit auf 80°C erwärmt und anschließend bei einem Druck von 0,1 bis 1,5 kPa und einer Temperatur von 80°C für eine Dauer von etwa 40 Minuten ausgeheizt. Es werden 85 g einer klaren, farblosen Flüssigkeit mit einer Viskosität von circa 20 mPa·s erhalten, die nach ²⁹Si-NMR-Spektroskopie zu über 100% H-Si(OEt)₂-Endgruppen aufweist.

In einem 5 l Planetenmischer (Typ FH6-S der Fa. Drais-Werke GmbH, D-6800 Mannheim) werden unter Luftausschluß 52 Teile Siloxan D, die in Tabelle 5a angegebene Menge an Siloxan B bzw. Siloxan C, 35,0 Teile Polymer 1, 0,4 Teile Ölsäure sowie 18 Teile pyrogene Kieselsäure (erhältlich als HDK H 15 von der Wacker-Chemie GmbH, D-8000 München) innerhalb von 35 Minuten mit einer Drehzahl von 160 U/min bei einer Temperatur von 45 bis 50 °C vermischt, wobei im Anschluß daran die Mischung weitere 20 Minuten mit einer Drehzahl von 160 U/min bei einem Druck von 1 bis 2 kPa gerührt wird. Die so erhaltene Masse wird unter Feuchtigkeitsausschluß in Tuben abgefüllt und bei einer Temperatur von 50°C gelagert. In einem Beobachtungszeitraum von 30 Tagen ist keine Veränderung der Masse und keine Wasserstoffentwicklung in der Tube zu beobachten.

Aus der so erhaltenen Masse werden nach einem Tag Lagerung 2 mm dicke Filme erzeugt, indem die Masse mit einer Spachtel auf eine Oberfläche aus Polytetrafluorethylen aufgetragen und der Luftfeuchtigkeit ausgesetzt wird. Die Zeit bis zur Ausbildung einer trockenen Oberfläche (Hautbildungszeit) wird bestimmt. Zwei Wochen nach dem Auftragen werden die entstandenen trockenen Filme auf ihre mechanischen Eigenschaften hin untersucht. Angaben über die Hautbildungszeit und die mechanischen Eigenschaften finden sich in Tabelle 6.

**Tabelle 5a**

| Beispiel | Siloxan B [Teile] | Siloxan C [Teile] |
|---|---|---|
| 10a | 60 | - |
| 10b | 80 | - |
| 10c | - | 60 |

### Beispiel 11

### Polymer 2

An einem Rotationsverdampfer werden 40,7 g Polymer 1, dessen Herstellung in Beispiel 10 beschrieben ist, 3,00 g Trimethylsilanol und 0,44 g 2-Ethylhexansäure 30 Minuten unter Ausschluß von Feuchtigkeit auf 80°C erwärmt und anschließend bei einem Druck von 0,1 bis 1,5 kPa und einer Temperatur von 80°C für eine Dauer von etwa 40 Minuten ausgeheizt. Es werden 42 g einer klaren, farblosen Flüssigkeit mit einer Viskosität von 25 mPa·s erhalten.

In einem 5 1 Planetenmischer (Typ FH6-S der Fa. Drais-Werke GmbH, D-6800 Mannheim) werden unter Luftausschluß 52 Teile Siloxan D, 25 Teile Siloxan B, 35,0 Teile Polymer 2, 0,4 Teile Ölsäure sowie 16 Teile pyrogene Kieselsäure (erhältlich als HDK H 15 von der Wacker-Chemie GmbH, D-8000 München) innerhalb von 35 Minuten mit einer Drehzahl von 160 U/min bei einer Temperatur von 45 bis 50 °C vermischt, wobei im Anschluß daran die Mischung weitere 20 Minuten mit einer Drehzahl von 160 U/min bei einem Druck von 1 bis 2 kPa gerührt wird. Mit der so erhaltenen Masse wird wie in Beispiel 10 beschrieben verfahren. In einem Beobachtungszeitraum von 30 Tagen ist keine Veränderung der Masse und keine Wasserstoffentwicklung in der Tube zu beobachten. Angaben über die Hautbildungszeit und die mechanischen Eigenschaften finden sich in Tabelle 6.

### Beispiel 12

In einem 5 1 Planetenmischer (Typ FH6-S der Fa. Drais-Werke GmbH, D-6800 Mannheim) werden unter Luftausschluß 52 Teile Siloxan D, 30 Teile Siloxan B, 40,0 Teile Polymer 2, dessen Herstellung in Beispiel 11 beschrieben ist, 0,4 Teile Ölsäure sowie 14 Teile pyrogene Kieselsäure (erhältlich als HDK H 15 von der Wacker-Chemie GmbH, D-8000 München) innerhalb von 35 Minuten mit einer Drehzahl von 160 U/min bei einer Temperatur von 45 bis 50 °C vermischt, wobei im Anschluß daran die Mischung weitere 20 Minuten mit einer Drehzahl von 160 U/min bei einem Druck von 1 bis 2 kPa gerührt wird. Mit der so erhaltenen Masse wird wie in Beispiel 10 beschrieben verfahren. In einem Beobachtungszeitraum von 30 Tagen ist keine Veränderung der Masse und keine Wasserstoffentwicklung in der Tube zu beobachten. Angaben über die Hautbildungszeit und die mechanischen Eigenschaften finden sich in Tabelle 6.

### Beispiel 13

Die in Beispiel 12 beschriebene Verfahrensweise wird wiederholt mit der Abänderung, daß anstelle von 0,4 Teilen Ölsäure 1,0 Teile Ölsäure eingesetzt werden.

In einem Beobachtungszeitraum von 30 Tagen ist keine Veränderung der Masse und keine Wasserstoffentwicklung in der Tube zu beobachten. Angaben über die Hautbildungszeit und die mechanischen Eigenschaften finden sich in Tabelle 6.

### Beispiel 14

In einem 5 l Planetenmischer (Typ FH6-S der Fa. Drais-Werke GmbH, D-6800 Mannheim) werden unter Luftausschluß 52 Teile Siloxan A, 30 Teile Polymer 2, dessen Herstellung in Beispiel 11 beschrieben ist, 2,0 Teile Hydrogentriethoxysilan, 0,4 Teile Ölsäure sowie 10 Teile pyrogene Kieselsäure (erhältlich als HDK H 15 von der Wacker-Chemie GmbH, D-8000 München) innerhalb von 35 Minuten mit einer Drehzahl von 160 U/min bei einer Temperatur von 45 bis 50 °C vermischt, wobei im Anschluß daran die Mischung weitere 20 Minuten mit einer Drehzahl von 160 U/min bei einem Druck von 1 bis 2 kPa gerührt wird. Mit der so erhaltenen Masse wird wie in Beispiel 10 beschrieben verfahren. In einem Beobachtungszeitraum von 30 Tagen ist keine Veränderung der Masse und keine Wasserstoffentwicklung in der Tube zu beobachten. Angaben über die Hautbildungszeit und die mechanischen Eigenschaften finden sich in Tabelle 6.

**Tabelle 6**

| Beispiel | Reißfestigkeit (N/mm²) | Reißdehnung (%) | Modul (N/mm²) | Shore-A-Härte | Weiterreißfestigkeit (N/mm) | t₁ in min |
|---|---|---|---|---|---|---|
| 10a | 1,2 | 110 | 1,1 | 46 | 3,6 | 30 |
| 10b | 0,8 | 113 | 0,8 | 39 | 3,2 | 30 |
| 10c | 3,5 | 149 | 1,9 | 50 | 4,3 | 22 |
| 11 | 1,9 | 170 | 1,3 | 37 | 6,0 | 15 |
| 12 | 1,6 | 190 | 0,9 | 31 | 3,1 | 40 |
| 13 | 1,1 | 144 | 1,1 | 29 | 3,2 | 30 |
| 14 | 2,6 | 130 | 1,9 | 45 | 5,0 | 25 |

### Beispiel 15

### Polymer 3

An einem Rotationsverdampfer werden 83,9 g α,ω-Dihydroxydimethylsiloxan mit durchschnittlich 13 Dimethylsiloxyeinheiten, 80,6 g Hydrogendiethoxymethylsilan und 0,82 g 2-Ethylhexansäure 120 Minuten unter Ausschluß von Feuchtigkeit auf 80°C erwärmt und anschließend bei einem Druck von 0,1 bis 1,5 kPa und einer Temperatur von 100°C für eine Dauer von etwa 60 Minuten ausgeheizt. Es werden 85 g einer klaren, farblosen Flüssigkeit mit einer Viskosität von circa 20 mPa·s erhalten, die nach ²⁹Si-NMR-Spektroskopie zu über 100% H-SiMe(OEt)₂-Endgruppen aufweist.

In einem 5 l Planetenmischer (Typ FH6-S der Fa. Drais-Werke GmbH, D-6800 Mannheim) werden unter Luftausschluß 52 Teile Siloxan D, die in Tabelle 7 angegebene Menge an Polymer 1, dessen Herstellung in Beispiel 10 beschrieben ist, und Polymer 3, 1,05 Teile Ölsäure, 25 Teile Dolomit (käuflich erhältlich als Microdol S bei Norwegian Talc Minerals A.S., N-5355 Knarrevik) sowie 8 Teile pyrogene Kieselsäure (erhältlich als HDK H 15 von der Wacker-Chemie GmbH, D-8000 München) innerhalb von 35 Minuten mit einer Drehzahl von 160 U/min bei einer Temperatur von 45 bis 50 °C vermischt, wobei im Anschluß daran die Mischung weitere 20 Minuten mit einer Drehzahl von 160 U/min bei einem Druck von 1 bis 2 kPa gerührt wird. Mit der so erhaltenen Masse wird wie in Beispiel 10 beschrieben verfahren. In einem Beobachtungszeitraum von 30 Tagen ist keine Veränderung der Masse und keine Wasserstoffentwicklung in der Tube zu beobachten. Angaben über die Hautbildungszeit und die mechanischen Eigenschaften finden sich in Tabelle 8.

**Tabelle 7**

| Beispiel | Polymer 1 [Teile] | Polymer 3 [Teile] |
|---|---|---|
| 15a | 42 | - |
| 15b | 21 | 21 |
| 15c | 7 | 35 |

### Beispiel 16

In einem 5 l Planetenmischer (Typ FH6-S der Fa. Drais-Werke GmbH, D-6800 Mannheim) werden unter Luftausschluß 60 Teile Siloxan A, 28 Teile Polymer 1, dessen Herstellung in Beispiel 10 beschrieben ist, 6,0 Teile Hydrogentriethoxysilan, 1,05 Teile Ölsäure, 35 Teile Dolomit (käuflich erhältlich als Microdol S bei Norwegian Talc Minerals A.S., N-5355 Knarrevik) sowie 11 Teile pyrogene Kieselsäure (erhältlich als HDK H 15 von der Wacker-Chemie GmbH, D-8000 München) innerhalb von 35 Minuten mit einer Drehzahl von 160 U/min bei einer Temperatur von 45 bis 50 °C vermischt, wobei im Anschluß daran die Mischung weitere 20 Minuten mit einer Drehzahl von 160 U/min bei einem Druck von 1 bis 2 kPa gerührt wird. Mit der so erhaltenen Masse wird wie in Beispiel 10 beschrieben verfahren. In einem Beobachtungszeitraum von 30 Tagen ist keine Veränderung der Masse und keine Wasserstoffentwicklung in der Tube zu beobachten. Angaben über die Hautbildungszeit und die mechanischen Eigenschaften finden sich in Tabelle 8.

### Beispiel 17

In einem 5 l Planetenmischer (Typ FH6-S der Fa. Drais-Werke GmbH, D-6800 Mannheim) werden unter Luftausschluß 52 Teile Siloxan A, 30 Teile Polymer 1, dessen Herstellung in Beispiel 10 beschrieben ist, 5,0 Teile Hydrogentriethoxysilan, 1,0 Teile Ölsäure sowie 14 Teile pyrogene Kieselsäure (erhältlich als HDK H 15 von der Wacker-Chemie GmbH, D-8000 München) innerhalb von 35 Minuten mit einer Drehzahl von 160 U/min bei einer Temperatur von 45 bis 50 °C vermischt, wobei im Anschluß daran die Mischung weitere 20 Minuten mit einer Drehzahl von 160 U/min bei einem Druck von 1 bis 2 kPa gerührt wird. Mit der so erhaltenen Masse wird wie in Beispiel 10 beschrieben verfahren. In einem Beobachtungszeitraum von 30 Tagen ist keine Veränderung der Masse und keine Wasserstoffentwicklung in der Tube zu beobachten. Angaben über die Hautbildungszeit und die mechanischen Eigenschaften finden sich in Tabelle 8.

**Tabelle 8**

| Beispiel | Reißfestigkeit (N/mm²) | Reißdehnung (%) | Modul (N/mm²) | Shore-A-Härte | Weiterreißfestigkeit (N/mm) | t₁ in min |
|---|---|---|---|---|---|---|
| 15a | 1,9 | 170 | 1,3 | 37 | 6,0 | 25 |
| 15b | 1,6 | 140 | 1,1 | 33 | 2,6 | 40 |
| 15c | 1,9 | 315 | 0,8 | 34 | 5,2 | 120 |
| 16 | 1,2 | 335 | 1,2 | 26 | 4,5 | 10 |
| 17 | 2,6 | 240 | 1,0 | 35 | 5,5 | 10 |

### Beispiel 18

### Vernetzer 1

Zu einem Gemisch aus 164 g (1 mol) Hydrogentriethoxysilan und 20 mg Essigsäure werden unter Stickstoff und Rühren während einer Zeitspanne von 15 Minuten 13,5 g (0,75 mol) Wasser getropft, wobei sich die Mischung auf 45°C erwärmt. Nach einer Stunde weiterem Rühren wird der entstandene Ethanol an einem Rotationsverdampfer abdestilliert (1016 kPa/120°C) und anschließend das Rohprodukt bei 100 °C und 10 bis 15 hPa ausgeheizt. Es werden 68,3 g einer farblosen Flüssigkeit mit einem numerischen Mittel Mₙ von 461 und einem Verhältnis von Gewichtsmittel M_{w} zu numerischem Mittel Mₙ von 1,54 erhalten, welche nach ²⁹Si-NMR-Spektroskopie durchschnittlich folgende Summenformel hat:

[(EtO)₂HSiO_{0,5}]_{0,41} [(EtO)HSiO]_{0,41} [HSiO_{1,5}]_{0,18} .

In einem 5 l Planetenmischer (Typ FH6-S der Fa. Drais-Werke GmbH, D-6800 Mannheim) werden unter Luftausschluß die in Tabelle 9 angegebenen Komponenten innerhalb von 35 Minuten mit einer Drehzahl von 160 U/min bei einer Temperatur von 45 bis 50 °C vermischt, wobei im Anschluß daran die Mischung weitere 20 Minuten mit einer Drehzahl von 160 U/min bei einem Druck von 1 bis 2 kPa gerührt wird. Mit der so erhaltenen Masse wird wie in Beispiel 10 beschrieben verfahren. In einem Beobachtungszeitraum von 30 Tagen ist keine Veränderung der Masse und keine Wasserstoffentwicklung in der Tube zu beobachten. Angaben über die Hautbildungszeit und die mechanischen Eigenschaften finden sich in Tabelle 10.

**Tabelle 9**

| Beispiel | Siloxan | | | Vernetzer 1 | Ölsäure | pyrogene Kieselsäure¹⁾ | Dolomit²⁾ |
|---|---|---|---|---|---|---|---|
| | A [Tl] | B [Tl] | D [Tl] | [Tl] | [Tl] | [Tl] | [Tl] |
| 18a | 52 | 40 | - | 10 | 0,4 | 8 | - |
| 18b | 52 | 40 | - | 10 | 0,4 | 10 | - |
| 18c | 52 | 40 | - | 10 | 0,4 | 12 | - |
| 18d | 60 | 60 | - | 12 | 0,6 | 4 | 55 |
| 18e | 60 | 60 | - | 12 | 0,6 | 6 | 55 |
| 18f | 60 | 60 | - | 12 | 0,6 | 8 | 55 |
| 18g | 60 | 40 | - | 18 | 0,6 | 12 | 45 |
| 18h | 50 | 40 | 10 | 10 | 0,6 | 10 | 55 |
| 18k | 52 | 40 | - | 10 | 0,4 | 10 | - |

| | | | | | | | |
|---|---|---|---|---|---|---|---|
| 1) erhältlich als HDK H 15 von der Wacker-Chemie GmbH, D-8000 München | | | | | | | |
| 2) erhältlich als Microdol S bei Norwegian Talc Minerals A.S., N-5355 Knarrevik Tl = Teile | | | | | | | |

**Tabelle 10**

| Beispiel | Reißfestigkeit (N/mm²) | Reißdehnung (%) | Modul (N/mm²) | Shore-A-Härte | Weiterreißfestigkeit (N/mm) | t₁ in min |
|---|---|---|---|---|---|---|
| 18a | 1,0 | 270 | 0,5 | 21 | 3,4 | 16 |
| 18b | 1,1 | 270 | 0,5 | 27 | 4,5 | 13 |
| 18c | 1,7 | 290 | 0,6 | 28 | 5,1 | 10 |
| 18d | 1,0 | 250 | 0,4 | 16 | 2,6 | 60 |
| 18e | 1,4 | 340 | 0,5 | 19 | 3,0 | 35 |
| 18f | 1,6 | 330 | 0,6 | 21 | 3,4 | 30 |
| 18g | 1,9 | 196 | 1,1 | 43 | 6,1 | 12 |
| 18h | 1,9 | 190 | 1,1 | 43 | 6,1 | 15 |
| 18k | 1,1 | 270 | 0,6 | 27 | 4,5 | 13 |

### Beispiel 19

### Vernetzer 2

Ein Gemisch aus 164 g (1 mol) Hydrogentriethoxysilan und 35,6 g Trimethylsilanol wird mit 20 mg Essigsäure versetzt und 15 Minuten gerührt. Hierzu werden anschließend unter Stickstoff und Rühren während einer Zeitspanne von 15 Minuten 13,5 g (0,75 mol) Wasser getropft, wobei sich die Mischung auf 45°C erwärmt. Nach einer Stunde weiterem Rühren wird der entstandene Ethanol an einem Rotationsverdampfer abdestilliert (1016 kPa/120°C) und anschließend das Rohprodukt bei 100 °C und 10 bis 15 hPa ausgeheizt. Es werden 104 g einer farblosen Flüssigkeit mit einem numerischen Mittel Mₙ von 520 und einem Verhältnis von Gewichtsmittel M_{w} zu numerischem Mittel Mₙ von 1,61 erhalten.

### Vernetzer 3

Die oben für die Herstellung des Vernetzers 2 beschriebene Arbeitsweise wird wiederholt mit der Abänderung, daß anstelle von 35,6 g Trimethylsilanol 53,4 g Trimethylsilanol eingesetzt werden. Es werden 95,2 g einer farblosen Flüssigkeit mit einem numerischen Mittel Mₙ von 555 und einem Verhältnis von Gewichtsmittel M_{w} zu numerischem Mittel Mₙ von 1,63 erhalten.

In einem 5 1 Planetenmischer (Typ FH6-S der Fa. Drais-Werke GmbH, D-6800 Mannheim) werden unter Luftausschluß 50 Teile Siloxan A, 10,0 Teile Siloxan D, 40 Teile Siloxan B, die in Tabelle 11 angegebene Menge und Art an Vernetzer, 0,6 Teile Ölsäure, 55 Teile Dolomit (käuflich erhältlich als Microdol S bei Norwegian Talc Minerals A.S., N-5355 Knarrevik) sowie 10 Teile pyrogene Kieselsäure (erhältlich als HDK H 15 von der Wacker-Chemie GmbH, D-8000 München) innerhalb von 35 Minuten mit einer Drehzahl von 160 U/min bei einer Temperatur von 45 bis 50 °C vermischt, wobei im Anschluß daran die Mischung weitere 20 Minuten mit einer Drehzahl von 160 U/min bei einem Druck von 1 bis 2 kPa gerührt wird. Mit der so erhaltenen Masse wird wie in Beispiel 10 beschrieben verfahren. In einem Beobachtungszeitraum von 30 Tagen ist keine Veränderung der Masse und keine Wasserstoffentwicklung in der Tube zu beobachten. Angaben über die Hautbildungszeit und die mechanischen Eigenschaften finden sich in Tabelle 12.

**Tabelle 11**

| Beispiel | Vernetzer 1³⁾ [Teile] | Vernetzer 2 [Teile] | Vernetzer 3 [Teile] |
|---|---|---|---|
| 19a | - | 20 | - |
| 19b | - | - | 20 |
| 19c | - | - | 15 |
| 19d | 3 | - | 15 |

| | | | |
|---|---|---|---|
| 3) Herstellung in Beispiel 18 beschrieben. | | | |

### Beispiel 20

In einem 5 l Planetenmischer (Typ FH6-S der Fa. Drais-Werke GmbH, D-6800 Mannheim) werden unter Luftausschluß 52 Teile Siloxan A, 40 Teile Siloxan B, 10,0 Teile Vernetzer 2, dessen Herstellung in Beispiel 19 beschrieben ist, 0,4 Teile Ölsäure sowie 10 Teile pyrogene Kieselsäure (erhältlich als HDK H 15 von der Wacker-Chemie GmbH, D-8000 München) innerhalb von 35 Minuten mit einer Drehzahl von 160 U/min bei einer Temperatur von 45 bis 50 °C vermischt, wobei im Anschluß daran die Mischung weitere 20 Minuten mit einer Drehzahl von 160 U/min bei einem Druck von 1 bis 2 kPa gerührt wird. Mit der so erhaltenen Masse wird wie in Beispiel 10 beschrieben verfahren. In einem Beobachtungszeitraum von 30 Tagen ist keine Veränderung der Masse und keine Wasserstoffentwicklung in der Tube zu beobachten. Angaben über die Hautbildungszeit und die mechanischen Eigenschaften finden sich in Tabelle 12.

**Tabelle 12**

| Beispiel | Reißfestigkeit (N/mm²) | Reißdehnung (%) | Modul (N/mm²) | Shore-A-Härte | Weiterreißfestigkeit (N/mm) | t₁ in min |
|---|---|---|---|---|---|---|
| 19a | 1,4 | 330 | 0,5 | 32 | 4,5 | 30 |
| 19b | 1,1 | 480 | 0,3 | 18 | 4,4 | 130 |
| 19c | 0,7 | 490 | 0,2 | 17 | 4,0 | 175 |
| 19d | 1,1 | 420 | 0,3 | 20 | 3,7 | 75 |
| 20 | 1,2 | 480 | 0,3 | 20 | 4,0 | 35 |

### Beispiel 21

### Vernetzer 4

Ein Gemisch aus 48,1 g (HMeSiO) ₄, 32,9 g Hydrogentriethoxysilan und 0,01 g PNCl₂ (10 %ige Lösung in Trichlorethylen) wird für eine Dauer von 2 Stunden auf 80°C erhitzt und anschließend mit 1,00 g MgO versetzt. Es werden 30 Minuten gerührt, filtriert und dann bei 80°C und 0,1 bis 1,5 kPa ausdestilliert. Es werden 68,9 g einer farblosen Flüssigkeit mit einem numerischen Mittel Mₙ von 390 und einem Verhältnis von Gewichtsmittel M_{w} zu numerischem Mittel Mₙ von 1,95 erhalten, welche nach ²⁹Si-NMR-Spektroskopie durchschnittlich folgende Summenformel hat:

[(EtO)₂HSiO_{0,5}]_{0,04} [(EtO)HSiO]_{0,14} [HSiO_{1,5}]_{0,04} [(EtO)HMeSiO_{0,5}]_{0,22} [HMeSiO]_{0,55} .

In einem 5 l Planetenmischer (Typ FH6-S der Fa. Drais-Werke GmbH, D-6800 Mannheim) werden unter Luftausschluß 50 Teile Siloxan A, 10,0 Teile Siloxan D, 40 Teile Siloxan B, die in Tabelle 13 angegebene Menge und Art an Vernetzer, 1,05 Teile Ölsäure, 55 Teile Dolomit (käuflich erhältlich als Microdol S bei Norwegian Talc Minerals A.S., N-5355 Knarrevik) sowie die in Tabelle 13 angegebene Menge an pyrogener Kieselsäure (erhältlich als HDK H 15 von der Wacker-Chemie GmbH, D-8000 München) innerhalb von 35 Minuten mit einer Drehzahl von 160 U/min bei einer Temperatur von 45 bis 50 °C vermischt, wobei im Anschluß daran die Mischung weitere 20 Minuten mit einer Drehzahl von 160 U/min bei einem Druck von 1 bis 2 kPa gerührt wird. Mit der so erhaltenen Masse wird wie in Beispiel 10 beschrieben verfahren. In einem Beobachtungszeitraum von 30 Tagen ist keine Veränderung der Masse und keine Wasserstoffentwicklung in der Tube zu beobachten. Angaben über die Hautbildungszeit und die mechanischen Eigenschaften finden sich in Tabelle 14.

**Tabelle 13**

| Beispiel | Vernetzer 1³⁾ [Teile] | Vernetzer 4 [Teile] | pyrogene Kieselsäure [Teile] |
|---|---|---|---|
| 21a | - | 7 | 10 |
| 21b | - | 10 | 10 |
| 21c | - | 10 | 8 |
| 21d | 2 | 10 | 9 |
| 21e | 4 | 10 | 9 |
| 21f | 6 | 10 | 9 |

| | | | |
|---|---|---|---|
| 3) Herstellung in Beispiel 18 beschrieben. | | | |

### Beispiel 22

In einem 5 l Planetenmischer (Typ FH6-S der Fa. Drais-Werke GmbH, D-6800 Mannheim) werden unter Luftausschluß 52 Teile Siloxan A, 40 Teile Siloxan B, 10,0 Teile Vernetzer 4, dessen Herstellung in Beispiel 21 beschrieben ist, 3,0 Teile Vernetzer 1, dessen Herstellung in Beispiel 18 beschrieben ist, 0,4 Teile Ölsäure sowie 10 Teile pyrogene Kieselsäure (erhältlich als HDK H 15 von der Wacker-Chemie GmbH, D-8000 München) innerhalb von 35 Minuten mit einer Drehzahl von 160 U/min bei einer Temperatur von 45 bis 50 °C vermischt, wobei im Anschluß daran die Mischung weitere 20 Minuten mit einer Drehzahl von 160 U/min bei einem Druck von 1 bis 2 kPa gerührt wird. Mit der so erhaltenen Masse wird wie in Beispiel 10 beschrieben verfahren. In einem Beobachtungszeitraum von 30 Tagen ist keine Veränderung der Masse und keine Wasserstoffentwicklung in der Tube zu beobachten. Angaben über die Hautbildungszeit und die mechanischen Eigenschaften finden sich in Tabelle 14.

**Tabelle 14**

| Beispiel | Reißfestigkeit (N/mm²) | Reißdehnung (%) | Modul (N/mm²) | Shore-A-Härte | Weiterreißfestigkeit (N/mm) | t₁ in min |
|---|---|---|---|---|---|---|
| 21a | 1,0 | 1020 | 0,07 | 4 | 4,4 | 300 |
| 21b | 0,9 | 680 | 0,2 | 7 | 3,8 | 300 |
| 21c | 0,6 | 670 | 0,08 | 9 | 2,4 | 240 |
| 21d | 1,2 | 520 | 0,2 | 13 | 3,1 | 95 |
| 21e | 1,5 | 500 | 0,2 | 15 | 3,1 | 45 |
| 21f | 1,0 | 380 | 0,3 | 17 | 3,4 | 40 |
| 22 | 1,1 | 400 | 0,3 | 14 | 3,5 | 20 |

### Beispiel 23

### Copolymer 1

Ein Gemisch aus 29,6 g 1,6-Hexandiol (erhältlich bei Aldrich-Chemie GmbH & Co. KG, D-7924 Steinheim) und 164 g Hydrogentriethoxysilan werden mit 30 mg Essigsäure während einer Zeitspanne von 4 Stunden auf 110°C erhitzt, wobei ca. 25 g Ethanol abdestillieren. Anschließend wird dann das entstandene restliche Ethanol sowie überschüssiges Hydrogentriethoxysilan bei 80°C und 0,1 bis 1,5 hPa abdestilliert. Es werden 76,0 g einer farblosen Flüssigkeit mit einem numerischen Mittel Mₙ von 323 und einem Verhältnis von Gewichtsmittel M_{w} zu numerischem Mittel Mₙ von 2,83 erhalten.

In einem 5 l Planetenmischer (Typ FH6-S der Fa. Drais-Werke GmbH, D-6800 Mannheim) werden unter Luftausschluß 50 Teile Siloxan A, 10,0 Teile Siloxan D, 60 Teile Siloxan B, die in Tabelle 15 angegebene Menge an Copolymer 1, 0,6 Teile Ölsäure, 80 Teile Dolomit (käuflich erhältlich als Microdol S bei Norwegian Talc Minerals A.S., N-5355 Knarrevik) sowie 10 Teile pyrogene Kieselsäure (erhältlich als HDK H 15 von der Wacker-Chemie GmbH, D-8000 München) innerhalb von 35 Minuten mit einer Drehzahl von 160 U/min bei einer Temperatur von 45 bis 50 °C vermischt, wobei im Anschluß daran die Mischung weitere 20 Minuten mit einer Drehzahl von 160 U/min bei einem Druck von 1 bis 2 kPa gerührt wird. Mit der so erhaltenen Masse wird wie in Beispiel 10 beschrieben verfahren. In einem Beobachtungszeitraum von 30 Tagen ist keine Veränderung der Masse und keine Wasserstoffentwicklung in der Tube zu beobachten. Angaben über die Hautbildungszeit und die mechanischen Eigenschaften finden sich in Tabelle 17.

**Tabelle 15**

| Beispiel | Copolymer 1 [Teile] |
|---|---|
| 23a | **12** |
| 23b | **9** |
| 23c | **6** |

### Beispiel 24

In einem 5 l Planetenmischer (Typ FH6-S der Fa. Drais-Werke GmbH, D-6800 Mannheim) werden unter Luftausschluß 52 Teile Siloxan A, 40,0 Teile Siloxan B, die in Tabelle 16 angegebene Menge an Copolymer 1, dessen Herstellung in Beispiel 23 beschrieben ist, 0,4 Teile ölsäure sowie 10 Teile pyrogene Kieselsäure (erhältlich als HDK H 15 von der Wacker-Chemie GmbH, D-8000 München) innerhalb von 35 Minuten mit einer Drehzahl von 160 U/min bei einer Temperatur von 45 bis 50 °C vermischt, wobei im Anschluß daran die Mischung weitere 20 Minuten mit einer Drehzahl von 160 U/min bei einem Druck von 1 bis 2 kPa gerührt wird. Mit der so erhaltenen Masse wird wie in Beispiel 10 beschrieben verfahren. In einem Beobachtungszeitraum von 30 Tagen ist keine Veränderung der Masse und keine Wasserstoffentwicklung in der Tube zu beobachten. Angaben über die Hautbildungszeit und die mechanischen Eigenschaften finden sich in Tabelle 17.

**Tabelle 16**

| Beispiel | Copolymer 1 [Teile] |
|---|---|
| 24a | 10 |
| 24b | 7 |

**Tabelle 17**

| Beispiel | Reißfestigkeit (N/mm²) | Reißdehnung (%) | Modul (N/mm²) | Shore-A-Härte | Weiterreißfestigkeit (N/mm) | t₁ in min |
|---|---|---|---|---|---|---|
| 23a | 1,1 | 820 | 0,2 | 11 | 4,7 | 24 |
| 23b | 1,3 | 870 | 0,1 | 11 | 4,8 | 30 |
| 23c | 1,5 | 900 | 0,1 | 10 | 4,7 | 35 |
| 24a | 1,3 | 500 | 0,3 | 15 | 5,0 | 30 |
| 24b | 1,2 | 490 | 0,3 | 15 | 4,5 | 30 |

### Beispiel 25

### Copolymer 2

Ein Gemisch aus 39,4 g 1,6-Hexandiol und 134 g Hydrogendiethoxymethylsilan werden mit 30 mg Essigsäure während einer Zeitspanne von 4 Stunden auf 90°C erhitzt, wobei ca. 34 g Ethanol abdestillieren. Anschließend wird dann das entstandene restliche Ethanol sowie überschüssiges Hydrogendiethoxymethylsilan bei 80°C und 0,1 bis 1,5 hPa abdestilliert. Es werden 76,9 g einer farblosen Flüssigkeit mit einem numerischen Mittel Mₙ von 250 und einem Verhältnis von Gewichtsmittel M_{w} zu numerischem Mittel Mₙ von 1,93 erhalten.

### Beispiel 26

### Copolymer 3

Ein Gemisch aus 18,2 g Glucose und 164 g Hydrogentriethoxysilan werden mit 30 mg Essigsäure während einer Zeitspanne von 5 Stunden auf 120°C erhitzt, wobei ca. 20 g Ethanol abdestillieren. Anschließend wird dann das entstandene restliche Ethanol sowie überschüssiges Hydrogentriethoxysilan bei 80°C und 0,1 bis 1,5 hPa abdestilliert. Es werden 56,4 g einer farblosen Flüssigkeit erhalten.

An Luft härtet das so erhaltene Copolymer 3 innerhalb von 30 Minuten zu einem harten, transparenten Film.

## Patentansprüche

1. Unter Ausschluß von Wasser lagerfähige, bei Zutritt von Wasser bei Raumtemperatur unter Abspaltung von Alkoholen zu Elastomeren vernetzbare Organo(poly)siloxanmassen, herstellbar aus
(A) α,ω-Dihydroxyorgano(poly)siloxan,
(B) Organosiliciumverbindung der allgemeinen Formel 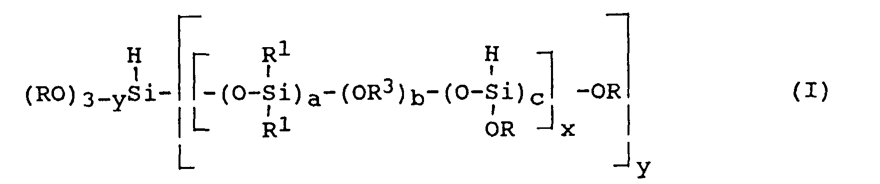 und/oder deren Teilhydrolysate und/oder deren Teilkondensate und/oder deren Teilcohydrolysate mit (C) und/oder deren Teilcokondensate mit (C) und/oder die Umsetzungsprodukte dieser Hydrolysate und Kondensate mit R²₃SiOH und/oder R²₃SiOSiR²₃, mit der Maßgabe, daß pro Molekül Organosiliciumverbindung durchschnittlich mehr als zwei Organyloxyreste RO- bzw. R⁴O- mit R bzw. R⁴ gleich einwertigem, gegebenenfalls substituierten Kohlenwasserstoffrest vorhanden sind,
wobei
R gleich oder verschieden sein kann und einen einwertigen, gegebenenfalls substituierten Kohlenwasserstoffrest oder den Rest -SiR²₃ bedeutet,
R¹ gleich oder verschieden sein kann und Wasserstoffatom, einen einwertigen organischen Rest oder eine Organosiloxygruppe bedeutet,
R² gleich oder verschieden sein kann und die Bedeutung von Wasserstoffatom oder einwertigem, organischen Rest hat,
R³ gleich oder verschieden sein kann und einen zweiwertigen gegebenenfalls substituierten organischen Rest bedeutet,
a jeweils gleich oder verschieden sein kann und 0 oder eine ganze Zahl zwischen 1 und 1000 bedeutet,
b jeweils gleich oder verschieden sein kann und 0 oder eine ganze Zahl zwischen 1 und 100 bedeutet,
c jeweils gleich oder verschieden sein kann und 0 oder eine ganze Zahl zwischen 1 und 100 bedeutet,
x jeweils gleich oder verschieden sein kann und 0 oder eine ganze Zahl zwischen 1 und 100 bedeutet und
y 1, 2 oder 3 sein kann,
sowie gegebenenfalls
(C) Organosiliciumverbindung der allgemeinen Formel 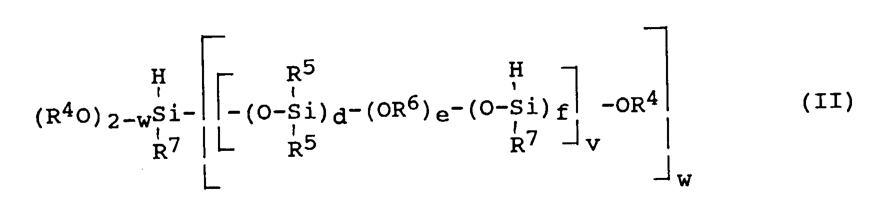 und/oder deren Teilhydrolysate und/oder deren Teilkondensate und/oder die Umsetzungsprodukte dieser Hydrolysate und Kondensate mit R²₃SiOH und/oder R²₃SiOSiR²₃, mit der Maßgabe, daß pro Molekül Organosiliciumverbindung durchschnittlich mehr als ein Organyloxyrest R⁴O- mit R⁴ gleich einwertigem, gegebenenfalls substituierten Kohlenwasserstoffrest vorhanden ist,
worin
R⁴ gleich oder verschieden sein kann und einen einwertigen, gegebenenfalls substituierten Kohlenwasserstoffrest oder den Rest -SiR²₃, wobei R² gleich oder verschieden sein kann und die Bedeutung von Wasserstoffatom oder einwertigem, organischen Rest hat, bedeutet,
R⁵ gleich oder verschieden sein kann und Wasserstoffatom, einen einwertigen organischen Rest oder eine Organosiloxygruppe bedeutet,
R⁶ gleich oder verschieden sein kann und einen zweiwertigen gegebenenfalls substituierten organischen Rest bedeutet,
R⁷ einen einwertigen, SiC-gebundenen, gegebenenfalls substituierten Kohlenwasserstoffrest mit 1 bis 18 Kohlenstoffatomen bedeutet,
d jeweils gleich oder verschieden sein kann und 0 oder eine ganze Zahl zwischen 1 und 1000 bedeutet,
e jeweils gleich oder verschieden sein kann und 0 oder eine ganze Zahl zwischen 1 und 100 bedeutet,
f jeweils gleich oder verschieden sein kann und 0 oder eine ganze Zahl zwischen 1 und 100 bedeutet,
v jeweils gleich oder verschieden sein kann und 0 oder eine ganze Zahl zwischen 1 und 100 bedeutet und
w 1 oder 2 sein kann,
mit der Maßgabe, daß für den Fall x = 0 und/oder a=b=c=0 Organosiliciumverbindung (C) der allgemeinen Formel (II) mit v verschieden 0 und (d+e+f) verschieden 0 mitverwendet wird.

2. Organo(poly)siloxanmassen nach Anspruch 1, dadurch gekennzeichnet, daß es sich bei der Komponente (A) um α,ω- Dihydroxydiorgano(poly)siloxan der allgemeinen Formel 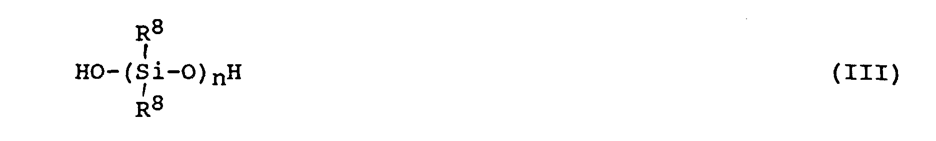 handelt, worin R⁸ gleiche oder verschiedene, einwertige, SiC-gebundene organische Reste bedeutet und n eine Zahl von mindestens 20 ist.

3. Organo(poly)siloxanmassen nach Anspruch 1 oder 2, dadurch gekennzeichnet, daß als Komponente (B) solche, ausgewählt aus der Gruppe bestehend aus
(RO)₃-Si-H (IV)
und/oder deren Teilhydrolysate und/oder deren Teilkondensate und/oder deren Teilcohydrolysate mit (C) und/oder deren Teilcokondensate mit (C) und/oder die Umsetzungsprodukte dieser Hydrolysate und Kondensate mit R²₃SiOH und/oder R²₃SiOSiR²₃, mit der Maßgabe, daß pro Molekül Organosiliciumverbindung durchschnittlich mehr als zwei Organyloxyreste RO- bzw. R⁴O- mit R bzw. R⁴ gleich einwertigem, gegebenenfalls substituierten Kohlenwasserstoffrest vorhanden sind,
wobei R und R² jeweils die obengenannte Bedeutung haben, 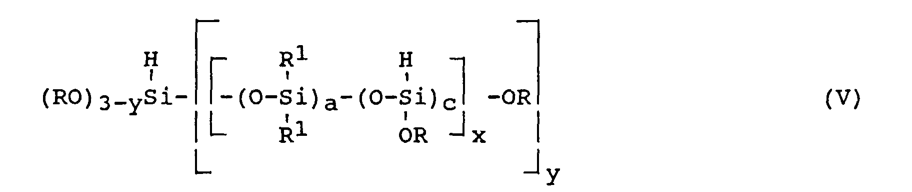 und/oder deren Teilhydrolysate und/oder deren Teilkondensate und/oder deren Teilcohydrolysate mit (C) und/oder deren Teilcokondensate mit (C) und/oder die Umsetzungsprodukte dieser Hydrolysate und Kondensate mit R²₃SiOH und/oder R²₃SiOSiR²₃, mit der Maßgabe, daß pro Molekül Organosiliciumverbindung durchschnittlich mehr als zwei Organyloxyreste RO- bzw. R⁴O- mit R bzw. R⁴ gleich einwertigem, gegebenenfalls substituierten Kohlenwasserstoffrest vorhanden sind und a sowie c jeweils durchschnittlich verschieden 0 sind,
wobei R, R², R¹, a, c und y jeweils die obengenannte Bedeutung haben und x jeweils gleich oder verschieden sein kann und eine ganze Zahl zwischen 1 und 100 bedeuten, 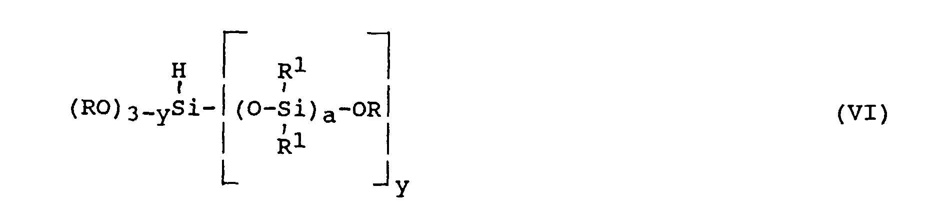 und/oder die entsprechenden Teilhydrolysate und/oder Teilkondensate und/oder deren Teilcohydrolysate mit (C) und/oder deren Teilcokondensate mit (C) und/oder die Umsetzungsprodukte dieser Hydrolysate und Kondensate mit R²₃SiOH und/oder R²₃SiOSiR²₃, mit der Maßgabe, daß pro Molekül Organosiliciumverbindung durchschnittlich mehr als zwei Organyloxyreste RO- bzw. R⁴O- mit R bzw. R⁴ gleich einwertigem, gegebenenfalls substituierten Kohlenwasserstoffrest vorhanden sind und 0 bis 50 Prozent der Anzahl der Reste R¹ die Bedeutung von Wasserstoffatom haben,
wobei
R, R¹, R² und y jeweils die obengenannte Bedeutung haben und a jeweils gleich oder verschieden sein kann und eine ganze Zahl zwischen 1 und 1000 bedeutet, 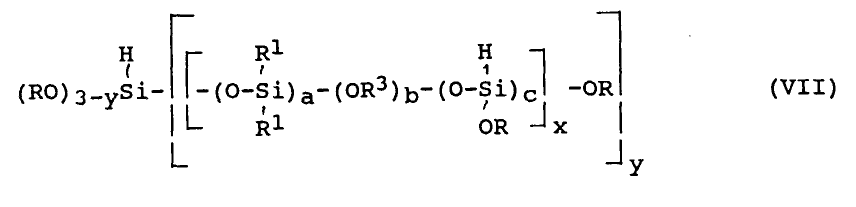 und/oder die entsprechenden Teilhydrolysate und/oder Teilkondensate und/oder deren Teilcohydrolysate mit (C) und/oder deren Teilcokondensate mit (C) und/oder die Umsetzungsprodukte dieser Hydrolysate und Kondensate mit R²₃SiOH und/oder R²₃SiOsiR²₃, mit der Maßgabe, daß pro Molekül Organosiliciumverbindung durchschnittlich mehr als zwei Organyloxyreste RO- bzw. R⁴O- mit R bzw. R⁴ gleich einwertigem, gegebenenfalls substituierten Kohlenwasserstoffrest vorhanden sind und b durchschnittlich größer 0 ist,
wobei
R, R¹, R², R³, a, b, c und y jeweils die obengenannte Bedeutung haben und x jeweils gleich oder verschieden sein kann und eine ganze Zahl zwischen 1 und 100 bedeutet,
sowie deren Gemische, eingesetzt wird.

4. Organo(poly)siloxanmassen nach einem oder mehreren der Ansprüche 1 bis 3, dadurch gekennzeichnet, daß als Komponente (C) solche, ausgewählt aus der Gruppe bestehend aus 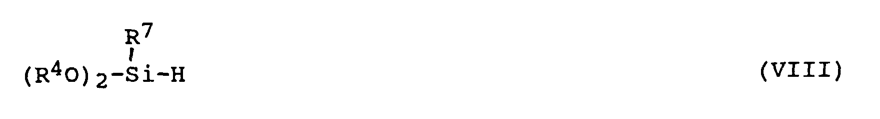 und/oder deren Teilhydrolysate und/oder deren Teilkondensate und/oder die Umsetzungsprodukte dieser Hydrolysate und Kondensate mit R²₃SiOH und/oder R²₃SiOSiR²₃, mit der Maßgabe, daß pro Molekül Organosiliciumverbindung durchschnittlich mehr als ein Organyloxyrest R⁴O- mit R⁴ gleich einwertigem, gegebenenfalls substituierten Kohlenwasserstoffrest vorhanden ist,
worin
R⁴, R² und R⁷ jeweils die die obengenannte Bedeutung haben, 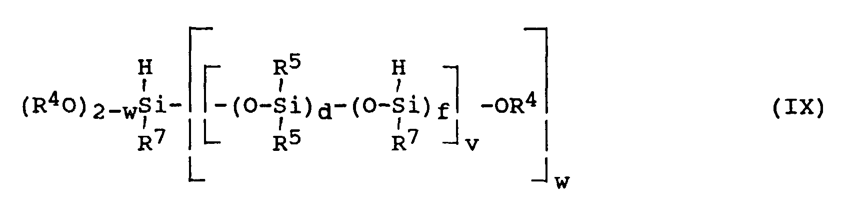 und/oder die entsprechenden Teilhydrolysate und/oder Teilkondensate und/oder die Umsetzungsprodukte dieser Hydrolysate und Kondensate mit R²₃SiOH und/oder R²₃SioSiR²₃, mit der Maßgabe, daß pro Molekül Organosiliciumverbindung durchschnittlich mehr als ein Organyloxyrest R⁴O- mit R⁴ gleich einwertigen, gegebenenfalls substituierten Kohlenwasserstoffrest vorhanden ist und d sowie f jeweils durchschnittlich verschieden 0 sind,
worin
R⁴, R², R⁵, R⁷, d, f und w jeweils die obengenannte Bedeutung haben und v jeweils gleich oder verschieden sein kann und eine ganze Zahl zwischen 1 und 100 bedeutet, 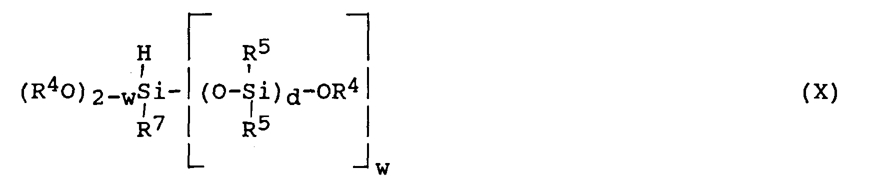 und/oder die entsprechenden Teilhydrolysate und/oder Teilkondensate und/oder die Umsetzungsprodukte dieser Hydrolysate und Kondensate mit R²₃SiOH und/oder R²₃SiOSiR²₃, mit der Maßgabe, daß pro Molekül Organosiliciumverbindung durchschnittlich mehr als ein Organyloxyrest R⁴O- mit R⁴ gleich einwertigem, gegebenenfalls substituierten Kohlenwasserstoffrest vorhanden ist und 0 bis 50 Prozent der Anzahl der Reste R⁵ die Bedeutung von Wasserstoffatom haben,
worin
R⁴, R², R⁵, R⁷ und w jeweils die obengenannte Bedeutung haben und d jeweils gleich oder verschieden sein kann und eine ganze Zahl zwischen 1 und 1000 bedeutet, 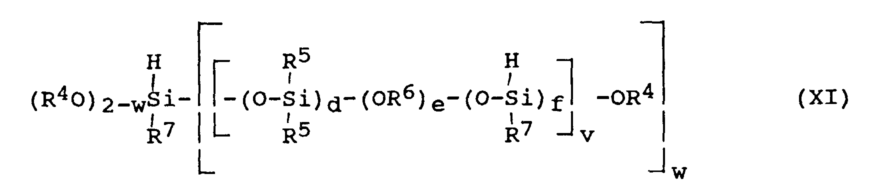 und/oder die entsprechenden Teilhydrolysate und/oder Teilkondensate und/oder die Umsetzungsprodukte dieser Hydrolysate und Kondensate mit R²₃SiOH und/oder R²₃SiOSiR²₃, mit der Maßgabe, daß pro Molekül Organosiliciumverbindung durchschnittlich mehr als ein Organyloxyrest R⁴O- mit R⁴ gleich einwertigem, gegebenenfalls substituierten Kohlenwasserstoffrest vorhanden ist und e durchschnittlich größer 0 ist,
worin
R⁴, R², R⁵, R⁶, R⁷, d, e, f und w jeweils die obengenannte Bedeutung haben und v jeweils gleich oder verschieden sein kann und eine ganze Zahl zwischen 1 und 100 bedeutet,
sowie deren Gemische, eingesetzt wird.

5. Organo(poly)siloxanmassen nach einem oder mehreren der Ansprüche 1 bis 4, dadurch gekennzeichnet, daß sie herstellbar sind aus, jeweils bezogen auf das Gesamtgewicht der Organo(poly)siloxanmasse,
(A) 20 bis 98 Gewichtsprozent α,ω-Dihydroxyorgano(poly)siloxan,
(B) 1 bis 50 Gewichtsprozent Organosiliciumverbindung der Formel (I),
(C) 0 bis 50 Gewichtsprozent Organosiliciumverbindung der Formel (II),
(D) 0 bis 70 Gewichtsprozent Füllstoff,
(E) 0 bis 70 Gewichtsprozent Weichmacher,
(F) 0 bis 20 Gewichtsprozent Haftvermittler,
(G) 0 bis 20 Gewichtsprozent Scavenger,
(H) 0 bis 10 Gewichtsprozent Kondensationskatalysator und
(K) 0 bis 50 Gewichtsprozent Additive,
mit der Maßgabe, daß mindestens eine der Komponenten (D), (E) und (F) verwendet wird, falls Komponente (B) gleich Silan der Formel (IV) ist.

6. Organo(poly)siloxanmassen nach Anspruch 5, dadurch gekennzeichnet, daß als Kondensationskatalysatoren (H) saure, von Metallatomen freie Katalysatoren eingesetzt werden.

7. Verfahren zur Herstellung von unter Abspaltung von Alkoholen zu Elastomeren vernetzbaren Organo(poly)siloxanmassen, dadurch gekennzeichnet, daß, jeweils bezogen auf das Gesamtgewicht der Organo(poly)siloxanmasse,
(A) 20 bis 98 Gewichtsprozent α,ω-Dihydroxyorgano(poly)siloxan,
(B) 1 bis 50 Gewichtsprozent Organosiliciumverbindung der Formel (I),
(C) 0 bis 50 Gewichtsprozent Organosiliciumverbindung der Formel (II),
(D) 0 bis 70 Gewichtsprozent Füllstoff,
(E) 0 bis 70 Gewichtsprozent Weichmacher,
(F) 0 bis 20 Gewichtsprozent Haftvermittler,
(G) 0 bis 20 Gewichtsprozent Scavenger,
(H) 0 bis 10 Gewichtsprozent Kondensationskatalysator und
(K) 0 bis 50 Gewichtsprozent Additive,
mit der Maßgabe, daß für den Fall in Formel (I) x = 0 und/oder a=b=c=0 Organosiliciumverbindung (C) der allgemeinen Formel (II) mit v verschieden 0 und (d+e+f) verschieden 0 mitverwendet wird,
sowie gegebenenfalls weitere Stoffe in beliebiger Reihenfolge miteinander vermischt werden, die Mischung in einer 1. Stufe bei einer Temperatur von 15 bis 80 °C und einem Druck von 900 bis 1 100 hPa für eine Dauer von 5 bis 90 Minuten gerührt und anschließend in einer 2. Stufe bei einem Druck von 0,01 bis 100 hPa für eine Dauer von 3 bis 60 Minuten weitergerührt wird, wobei die Rührgeschwindigkeit so gewählt wird, daß sich die Temperatur der Masse während des Rührens ohne weitere Wärmezufuhr auf einen Wert innerhalb des Temperaturbereiches von 15°C und 80°C erhöht.

8. Verfahren nach Anspruch 7, dadurch gekennzeichnet, daß, bezogen auf das Gesamtgewicht der Organo(poly)siloxanmasse,
(C) 1 bis 20 Gewichtsprozent Organosiliciumverbindung der Formel (II)
eingesetzt werden.

9. Organosiliciumverbindungen der Formel 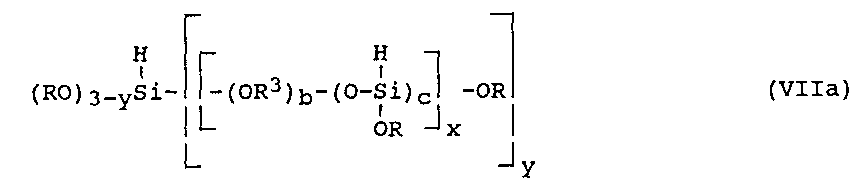 und/oder die entsprechenden Teilhydrolysate und/oder Teilkondensate und/oder deren Teilcohydrolysate mit (C) und/oder deren Teilcokondensate mit (C) und/oder die Umsetzungsprodukte dieser Hydrolysate und Kondensate mit R²₃SiOH und/oder R²₃SiOSiR²₃,
wobei
R, R², R³, b, c und y jeweils eine der obengenannte Bedeutung haben und x jeweils gleich oder verschieden sein kann und eine ganze Zahl zwischen 1 und 100 bedeutet,
mit der Maßgabe, daß pro Molekül Organosiliciumverbindung durchschnittlich mehr als zwei Organyloxyreste RO- bzw. R⁴O- mit R bzw. R⁴ gleich einwertigem, gegebenenfalls substituierten Kohlenwasserstoffrest vorhanden sind und sowohl b als auch c durchschnittlich größer 0 ist.

10. Organosiliciumverbindung der Formel 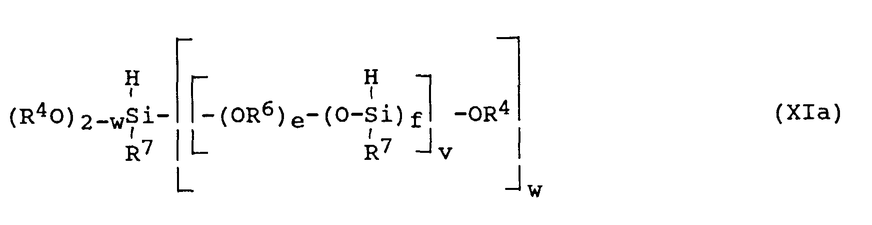 und/oder die entsprechenden Teilhydrolysate und/oder Teilkondensate und/oder die Umsetzungsprodukte dieser Hydrolysate und Kondensate mit R²₃SioH und/oder R²₃SiOSiR²₃,
wobei
R⁴, R², R⁶, R⁷, e, f und w jeweils eine der obengenannten Bedeutung haben und v jeweils gleich oder verschieden sein kann und eine ganze Zahl zwischen 1 und 100 bedeutet,
mit der Maßgabe, daß pro Molekül Organosiliciumverbindung durchschnittlich mehr als ein Organyloxyrest R⁴O- mit R⁴ gleich einwertigem, gegebenenfalls substituierten Kohlenwasserstoffrest vorhanden sind und sowohl e als auch f durchschnittlich größer 0 ist.

## Claims

1. Organo (poly)siloxane compositions which can be stored in the absence of water, can be crosslinked at room temperature in the presence of water to give elastomers with elimination of alcohols and can be prepared from
(A) α,ω-dihydroxyorgano(poly)siloxane,
(B) an organosilicon compound of the general formula 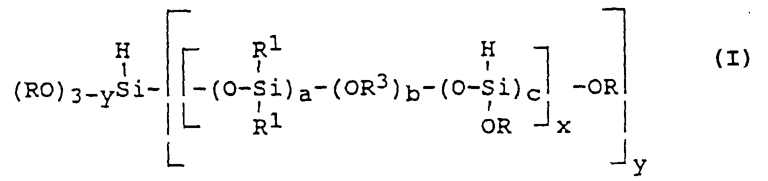 and/or partial hydrolysates thereof and/or partial condensates thereof and/or partial cohydrolysates thereof with (C) and/or partial cocondensates thereof with (C) and/or the products of the reaction of these hydrolysates and condensates with R²₃SiOH and/or R²₃SiOSiR²₃, with the proviso that each organosilicon compound molecule contains on average more than two organyloxy radicals RO- or R⁴O- where R and R⁴ are monovalent, optionally substituted hydrocarbon radicals,
where
R may be identical or different and is a monovalent, optionally substituted hydrocarbon radical or the radical -SiR²₃,
R¹ may be identical or different and is a hydrogen atom, a monovalent organic radical or an organosiloxy group,
R² may be identical or different and is a hydrogen atom or a monovalent organic radical,
R³ may be identical or different and is a divalent, optionally substituted organic radical,
a may in each case be identical or different and is 0 or an integer between 1 and 1,000,
b may in each case be identical or different and is 0 or an integer between 1 and 100,
c may in each case be identical or different and is 0 or an integer between 1 and 100,
x may in each case be identical or different and is 0 or an integer between 1 and 100, and
y may be 1, 2 or 3,
and optionally
(C) an organosilicon compound of the general formula 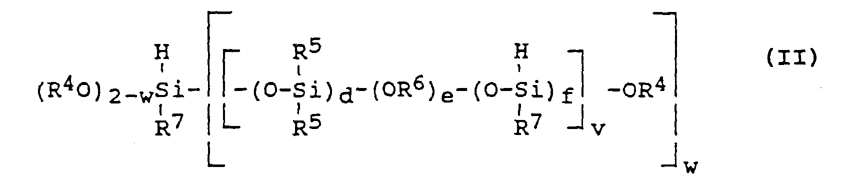 and/or partial hydrolysates thereof and/or partial condensates thereof and/or the products of the reaction of these hydrolysates and condensates with R²₃SiOH and/or R²₃SiOSiR²₃, with the proviso that each organosilicon compound molecule contains on average more than one organyloxy radical R⁴O- where R⁴ is a monovalent, optionally substituted hydrocarbon radical,
in which
R⁴ may be identical or different and is a monovalent, optionally substituted hydrocarbon radical or the radical -SiR²₃, where R² may be identical or different and is a hydrogen atom or a monovalent organic radical,
R⁵ may be identical or different and is a hydrogen atom, a monovalent organic radical or an organosiloxy group,
R⁶ may be identical or different and is a divalent, optionally substituted organic radical,
R⁷ is a monovalent, SiC-bonded, optionally substituted hydrocarbon radical having 1 to 18 carbon atom(s),
d may in each case be identical or different and is 0 or an integer between 1 and 1,000,
e may in each case be identical or different and is 0 or an integer between 1 and 100,
f may in each case be identical or different and is 0 or an integer between 1 and 100,
v may in each case be identical or different and is 0 or an integer between 1 and 100, and
w may be 1 or 2,
with the proviso that, in the case where x = 0 and/or a = b = c = 0, an organosilicon compound (C) of the general formula (II) where v is not 0 and (d + e + f) is not 0 is also used.

2. Organo(poly)siloxane compositions according to Claim 1, characterised in that component (A) is an α,ω-dihydroxydiorgano(poly)siloxane of the general formula 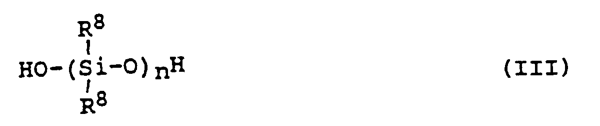 in which R⁸ is identical or different, monovalent, SiC-bonded organic radicals, and n is a number of at least 20.

3. Organo(poly)siloxane compositions according to Claim 1 or 2, characterised in that component (B) is selected from the group comprising
(RO)₃-Si-H (IV)
and/or partial hydrolysates thereof and/or partial condensates thereof and/or partial cohydrolysates thereof with (C) and/or partial cocondensates thereof with (C) and/or the products of the reaction of these hydrolysates and condensates with R²₃SiOH and/or R²₃SiOSiR²₃, with the proviso that each organosilicon compound molecule contains on average more than two organyloxy radicals RO- or R⁴O- where R and R⁴ are monovalent, optionally substituted hydrocarbon radicals,
where R and R² are each as defined above, 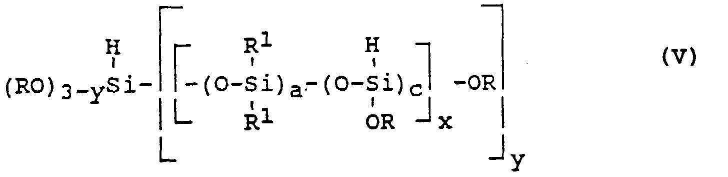 and/or partial hydrolysates thereof and/or partial condensates thereof and/or partial cohydrolysates thereof with (C) and/or partial cocondensates thereof with (C) and/or the products of the reaction of these hydrolysates and condensates with R²₃SiOH and/or R²₃SiOSiR²₃, with the proviso that each organosilicon compound molecule contains on average more than two organyloxy radicals RO- or R⁴O- where R and R⁴ are monovalent, optionally substituted hydrocarbon radicals, and a and c are each on average not 0,
where
R, R², R¹, a, c and y are each as defined above and x may in each case be identical or different and is an integer between 1 and 100, 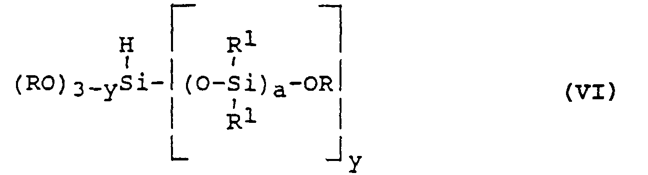 and/or the corresponding partial hydrolysates and/or partial condensates and/or partial cohydrolysates thereof with (C) and/or partial cocondensates thereof with (C) and/or the products of the reaction of these hydrolysates and condensates with R²₃SiOH and/or R²₃SiOSiR²₃, with the proviso that each organosilicon compound molecule contains on average more than two organyloxy radicals RO- or R⁴O- where R and R⁴ are monovalent, optionally substituted hydrocarbon radicals, and from 0 to 50 per cent of the radicals R¹ are hydrogen atoms,
where
R, R¹, R² and y are each as defined above and a may in each case be identical or different and is an integer between 1 and 1000, 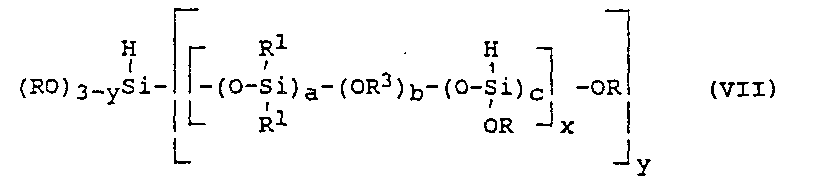 and/or the corresponding partial hydrolysates and/or partial condensates and/or partial cohydrolysates thereof with (C) and/or partial cocondensates thereof with (C) and/or the products of the reaction of these hydrolysates and condensates with R²₃SiOH and/or R²₃SiOSiR²₃, with the proviso that each organosilicon compound molecule contains on average more than two organyloxy radicals RO- or R⁴O- where R and R⁴ are monovalent, optionally substituted hydrocarbon radicals, and b is on average greater than 0,
where
R, R¹, R², R³, a, b, c and y are each as defined above and x may in each case be identical or different and is an integer between 1 and 100,
and mixtures thereof.

4. Organo(poly)siloxane compositions according to one or more of Claims 1 to 3, characterised in that component (C) is selected from the group comprising 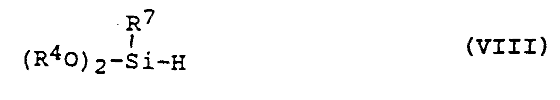 and/or partial hydrolysates thereof and/or partial condensates thereof and/or the products of the reaction of these hydrolysates and condensates with R²₃SiOH and/or R²₃SiOSiR²₃, with the proviso that each organosilicon compound molecule contains on average more than one organyloxy radical R⁴O- where R⁴ is a monovalent, optionally substituted hydrocarbon radical,
in which
R⁴, R² and R⁷ are each as defined above, 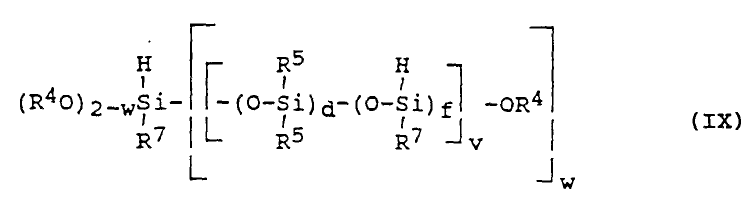 and/or the corresponding partial hydrolysates and/or partial condensates and/or the products of the reaction of these hydrolysates and condensates with R²₃SiOH and/or R²₃SiOSiR²₃, with the proviso that each organosilicon compound molecule contains on average more than one organyloxy radical R⁴O- where R⁴ is a monovalent, optionally substituted hydrocarbon radical, and d and f are each on average not 0,
in which
R⁴, R², R⁵, R⁷, d, f and w are each as defined above and v may in each case be identical or different and is an integer between 1 and 100, 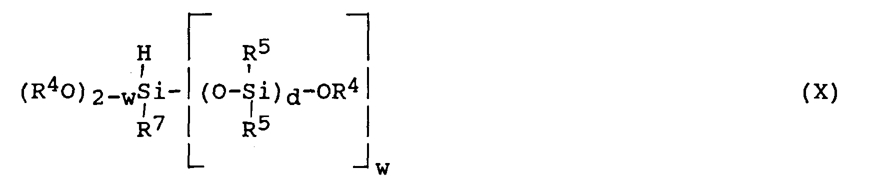 and/or the corresponding partial hydrolysates and/or partial condensates and/or the products of the reaction of these hydrolysates and condensates with R²₃SiOH and/or R²₃SiOSiR²₃, with the proviso that each organosilicon compound molecule contains on average more than one organyloxy radical R⁴O- where R⁴ is a monovalent, optionally substituted hydrocarbon radical, and from 0 to 50 per cent of the radicals R⁵ are hydrogen atoms,
in which
R⁴, R², R⁵, R⁷ and w are each as defined above and d may in each case be identical or different and is an integer between 1 and 1000, 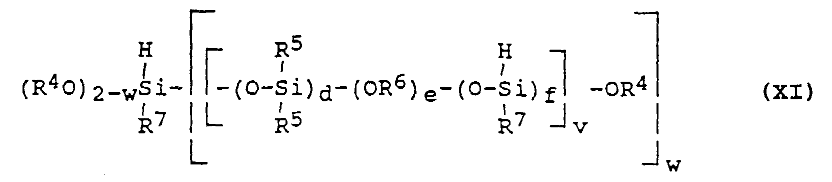 and/or the corresponding partial hydrolysates and/or partial condensates and/or the products of the reaction of these hydrolysates and condensates with R²₃SiOH and/or R²₃SiOSiR²₃, with the proviso that each organosilicon compound molecule contains on average more than one organyloxy radical R⁴O- where R⁴ is a monovalent, optionally substituted hydrocarbon radical, and e is on average greater than 0,
in which
R⁴, R², R⁵, R⁶, R⁷, d, e, f and w are each as defined above and v may in each case be identical or different and is an integer between 1 and 100,
and mixtures thereof.

5. Organo(poly)siloxane compositions according to one or more of Claims 1 to 4, which can be prepared from, in each case based on the total weight of the organo(poly)siloxane composition,
(A) from 20 to 98 per cent by weight of α,ω-dihydroxyorgano(poly)siloxane,
(B) from 1 to 50 per cent by weight of an organosilicon compound of the formula (I),
(C) from 0 to 50 per cent by weight of an organosilicon compound of the formula (II),
(D) from 0 to 70 per cent by weight of filler,
(E) from 0 to 70 per cent by weight of plasticiser,
(F) from 0 to 20 per cent by weight of adhesion promoter,
(G) from 0 to 20 per cent by weight of scavenger,
(H) from 0 to 10 per cent by weight of condensation catalyst and
(K) from 0 to 50 per cent by weight of additives,
with the proviso that at least one of components (D), (E) and (F) is used if component (B) is a silane of the formula (IV).

6. Organo(poly)siloxane compositions according to Claim 5, characterised in that the condensation catalysts (H) are acidic catalysts which are free from metal atoms.

7. Process for the preparation of organo(poly)siloxane compositions which can be crosslinked to give elastomers with elimination of alcohols, characterised in that, in each case based on the total weight of the organo(poly)siloxane composition,
(A) from 20 to 98 per cent by weight of α,ω-dihydroxyorgano(poly)siloxane,
(B) from 1 to 50 per cent by weight of an organosilicon compound of the formula (I),
(C) from 0 to 50 per cent by weight of an organosilicon compound of the formula (II),
(D) from 0 to 70 per cent by weight of filler,
(E) from 0 to 70 per cent by weight of plasticiser,
(F) from 0 to 20 per cent by weight of adhesion promoter,
(G) from 0 to 20 per cent by weight of scavenger,
(H) from 0 to 10 per cent by weight of condensation catalyst and
(K) from 0 to 50 per cent by weight of additives,
with the proviso that, in the case where x = 0 and/or a = b = c = 0 in formula I, an organosilicon compound (C) of the general formula (II) where v is not 0 and (d + e + f) is not 0 is also used,
and optionally further substances are mixed with one another in any desired sequence, the mixture is stirred, in a 1st step, at a temperature of from 15 to 80°C and at a pressure of from 900 to 1,100 hPa for from 5 to 90 minutes and subsequently, in a 2nd step, the stirring is continued at a pressure of from 0.01 to 100 hPa for from 3 to 60 minutes, the stirring speed being selected so that the temperature of the composition during the stirring increases to a value within the temperature range from 15°C to 80°C without further supply of heat.

8. Process according to Claim 7, characterised in that, based on the total weight of the organo(poly)siloxane composition,
(C) from 1 to 20 per cent by weight of an organosilicon compound of the formula (II) are exmployed.

9. Organosilicon compounds of the formula 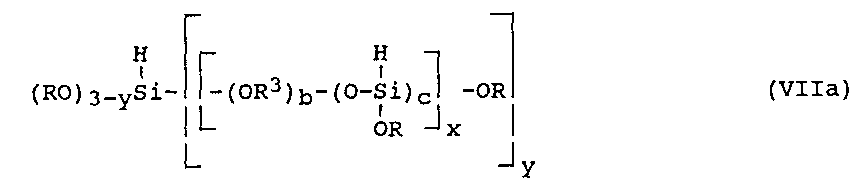 and/or the corresponding partial hydrolysates and/or partial condensates and/or partial cohydrolysates thereof with (C) and/or partial cocondensates thereof with (C) and/or the products of the reaction of these hydrolysates and condensates with R²₃SiOH and/or R²₃SiOSiR²₃,
where
R, R², R³, b, c and y are each as defined above and x may in each case be identical or different and is an integer between 1 and 100,
with the proviso that each organosilicon compound molecule contains on average more than two organyloxy radicals RO- or R⁴O- where R and R⁴ are monovalent, optionally substituted hydrocarbon radicals, and both b and c are on average greater than 0.

10. Organosilicon compound of the formula 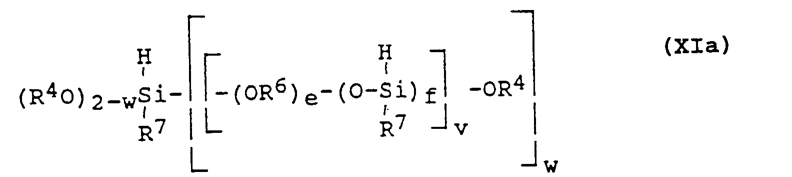 and/or the corresponding partial hydrolysates and/or partial condensates and/or the products of the reaction of these hydrolysates and condensates with R²₃SiOH and/or R²₃SiOSiR²₃, where
R⁴, R², R⁶, R⁷, e, f and w are each as defined above and v may in each case be identical or different and is an integer between 1 and 100,
with the proviso that each organosilicon compound molecule contains on average more than one organyloxy radical R⁴O- where R⁴ is a monovalent, optionally substituted hydrocarbon radical, and both e and f are on average greater than 0.

## Revendications

1. Mélanges d'organo(poly)siloxanes pouvant être réticulés en élastomères avec élimination d'alcools par introduction d'eau à température ambiante, stables en l'absence d'eau, pouvant être préparés à partir de
(A) α,ω-dihydroxyorgano(poly)siloxanes,
(B) composés organosilicium de formule générale 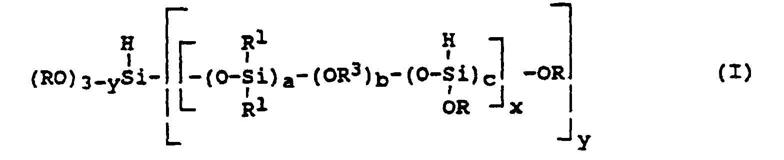 et/ou leurs hydrolysats partiels et/ou leurs condensats partiels et/ou leurs cohydrolysats partiels avec (C) et/ou leurs cocondensats partiels avec (C) et/ou les produits de réaction de ces hydrolysats et condensats avec R²₃SiOH et/ou R²₃SiOSiR²₃, avec la condition que, par molécule de composé organosilicié, soient présents en moyenne, plus de deux radicaux organyloxy RO- et R⁴O- respectivement, R et R⁴ étant respectivement des radicaux hydrocarbure monovalents, facultativement substitués, où
R peut être identique ou différent et représente un radical hydrocarbure monovalent, facultativement substitué ou le radical -SiR²₃;
R¹ peut être identique ou différent et représente un atome d'hydrogène, un radical organique monovalent ou un groupe organosiloxy;
R² peut être identique ou différent et a la signification d'un atome d'hydrogène ou d'un radical organique monovalent;
R³ peut être identique ou différent et représente un radical organique bivalent facultativement substitué,
a peut être chaque fois identique ou différent et représente 0 ou un nombre entier compris entre 1 et 1000;
b peut être chaque fois identique ou différent et représente 0 ou un nombre entier compris entre 1 et 100;
c peut être chaque fois identique ou différent et représente 0 ou un nombre entier compris entre 1 et 100;
x peut être chaque fois identique ou différent et représente 0 ou un nombre entier compris entre 1 et 100;
y peut être 1, 2 ou 3;
ainsi que facultativement
(C) composés organosiliciés de formule générale 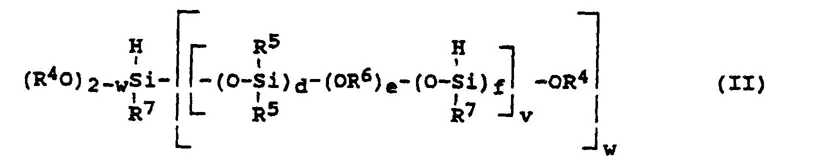 et/ou leurs hydrolysats partiels et/ou leurs condensats partiels et/ou les produits de réaction de ces hydrolysats et condensats avec R²₃SiOH et/ou R²₃SiOSiR²₃, avec la condition que, par molécule de composé organosilicié, soient présents en moyenne, plus d'un radical organyloxy R⁴O-, R⁴ étant un radical hydrocarbure monovalent, facultativement substitué,
où
R⁴ peut être identique ou différent et représente un radical hydrocarbure monovalent, facultativement substitué ou le radical -SiR²₃, où R² peut être identique ou différent et a la signification d'un atome d'hydrogène ou d'un radical organique monovalent;
R⁵ peut être identique ou différent et représente un atome d'hydrogène, un radical organique monovalent ou un groupe organosiloxy;
R⁶ peut être identique ou différent et représente un radical organique bivalent facultativement substitué;
R⁷ représente un radical hydrocarbure monovalent à liaison SiC, facultativement substitué, avec 1 à 18 atomes de carbone;
d peut être chaque fois identique ou différent et représente 0 ou un nombre entier compris entre 1 et 1000;
e peut être chaque fois identique ou différent et représente 0 ou un nombre entier compris entre 1 et 100;
f peut être chaque fois identique ou différent et représente 0 ou un nombre entier compris entre 1 et 100;
v peut être chaque fois identique ou différent et représente 0 ou un nombre entier compris entre 1 et 100;
w peut être 1 ou 2;
avec la condition que, dans le cas où x=0 et/ou a=b=c=0, on utilise un composé organosilicié (C) de formule générale (II) avec v différent de 0 et (d+e+f) différent de 0.

2. Mélanges d'organo(poly)siloxanes suivant la revendication 1, caractérisés en ce que le composant (A) consiste en un α,ω-dihydroxydiorgano(poly)siloxane de formule générale 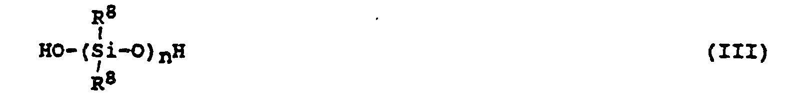 où R⁸ représente un radical organique identique ou différent, monovalent, à liaison SiC et n est un nombre entier d'au moins 20.

3. Mélanges d'organo(poly)siloxanes suivant la revendication 1 ou 2, caractérisés en ce que l'on utilise comme composants (B), ceux choisis dans le groupe constitué par
(RO)₃-Si-H (IV)
et/ou leurs hydrolysats partiels et/ou leurs condensats partiels et/ou leurs cohydrolysats partiels avec (C) et/ou leurs cocondensats partiels avec (C) et/ou les produits de réaction de ces hydrolysats et condensats avec R²₃SiOH et/ou R²₃SiOSiR²₃, avec la condition que, par molécule de composé organosilicié, soient présents en moyenne, plus de deux radicaux organyloxy RO- et R⁴O- respectivement, R et R⁴ étant respectivement des radicaux hydrocarbure monovalents, facultativement substitués,
où R et R² ont chacun la signification donnée précédemment, 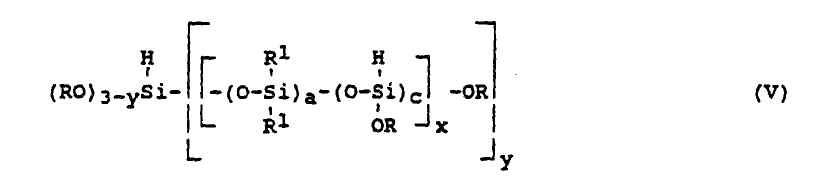 et/ou leurs hydrolysats partiels et/ou leurs condensats partiels et/ou leurs cohydrolysats partiels avec (C) et/ou leurs cocondensats partiels avec (C) et/ou les produits de réaction de ces hydrolysats et condensats avec R²₃SiOH et/ou R²₃SiOSiR²₃, avec la condition que, par molécule de composé organosilicié, soient présents en moyenne, plus de deux radicaux organyloxy RO- et R⁴O- respectivement, R et R⁴ étant respectivement des radicaux hydrocarbure monovalents, facultativement substitués, et a ainsi que c sont chaque fois en moyenne différents de 0,
où R, R², R¹, a, c et y ont chacun la signification donnée précédemment et x peut être chaque fois identique ou différent et représente un nombre entier compris entre 1 et 100, 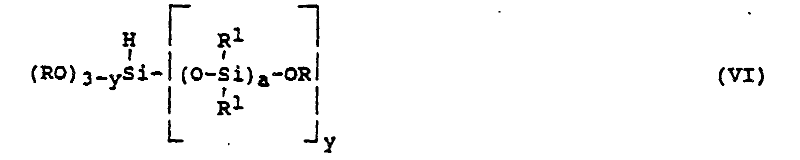 et/ou les hydrolysats partiels et/ou condensats partiels correspondants et/ou leurs cohydrolysats partiels avec (C) et/ou leurs cocondensats partiels avec (C) et/ou les produits de réaction de ces hydrolysats et condensats avec R²₃SiOH et/ou R²₃SiOSiR²₃, avec la condition que, par molécule de composé organosilicié, soient présents en moyenne, plus de deux radicaux organyloxy RO- et R⁴O- respectivement, R et R⁴ étant respectivement des radicaux hydrocarbure monovalents, facultativement substitués, et 0 à 50% du nombre de radicaux R¹ ont la signification d'un atome d'hydrogène,
où R, R¹, R² et y ont chacun la signification donnée précédemment et a peut être chaque fois identique ou différent et représente un nombre entier compris entre 1 et 1000, 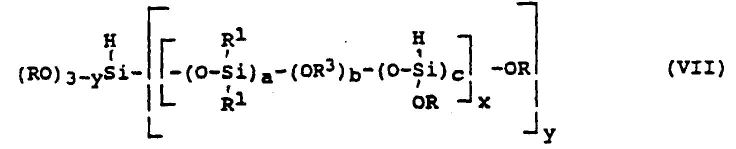 et/ou les hydrolysats partiels et/ou condensats partiels et/ou leurs cohydrolysats partiels avec (C) et/ou cocondensats partiels avec (C) correspondants et/ou les produits de réaction de ces hydrolysats et condensats avec R²₃SiOH et/ou R²₃SiOSiR²₃, avec la condition que, par molécule de composé organosilicium, sont présents en moyenne, plus de deux radicaux organyloxy RO- et respectivement, R⁴O- avec R et respectivement, R⁴ qui sont des radicaux hydrocarbure monovalents, facultativement substitués, et b est en moyenne supérieur à 0,
où R, R¹, R², a, b, c et y ont la signification donnée précédemment et x peut être chaque fois identique ou différent et représente un nombre entier compris entre 1 et 100,
ainsi que leurs mélanges.

4. Mélanges d'organo(poly)siloxanes suivant l'une ou plusieurs des revendications 1 à 3, caractérisés en ce que l'on utilise comme composant (C), ceux choisis dans le groupe constitué par 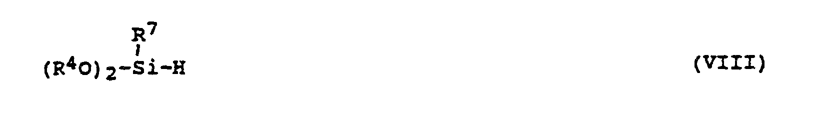 et/ou leurs hydrolysats partiels et/ou leurs condensats partiels et/ou les produits de réaction de ces hydrolysats et condensats avec R²₃SiOH et/ou R²₃SiOSiR²₃, avec la condition que, par molécule de composé organosilicié, soient présents en moyenne, plus d'un radical organyloxy R⁴O-, R⁴ étant un radical hydrocarbure monovalent, facultativement substitué,
où R⁴, R² et R⁷ ont chacun la signification donnée précédemment, 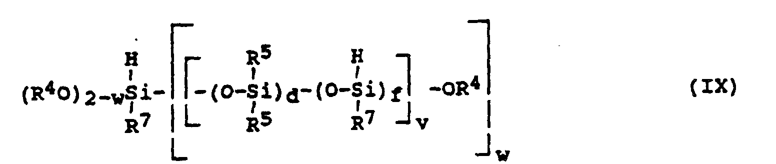 et/ou les hydrolysats partiels et/ou condensats partiels correspondants et/ou les produits de réaction de ces hydrolysats et condensats avec R²₃SiOH et/ou R²₃SiOSiR²₃, avec la condition que, par molécule de composé organosilicié, soient présents en moyenne, plus d'un radical organyloxy R⁴O-, R⁴ étant un radical hydrocarbure monovalent, facultativement substitué, et d ainsi que f sont chaque fois en moyenne différents de 0,
où
R⁴, R², R⁵, R⁷, d, f et w ont chacun la signification donnée précédemment, et v peut être chaque fois identique ou différent et représente un nombre entier compris entre 1 et 100, 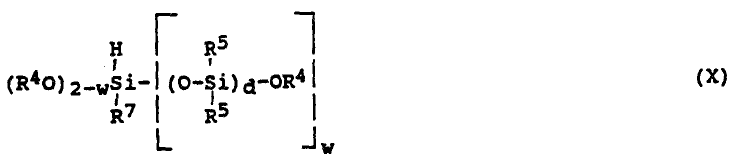 et/ou les hydrolysats partiels et/ou condensats partiels correspondants et/ou les produits de réaction de ces hydrolysats et condensats avec R²₃SiOH et/ou R²₃SiOSiR²₃, avec la condition que, par molécule de composé organosilicié, soient présents en moyenne, plus d'un radical organyloxy R⁴O-, R⁴ étant un radical hydrocarbure monovalent, facultativement substitué, et 0 à 50% du nombre de radicaux R⁵ ont la signification d'un atome d'hydrogène,
où
R⁴, R², R⁵, R⁷ et w ont chacun la signification donnée précédemment, et d peut être chaque fois identique ou différent et représente un nombre entier compris entre 1 et 1000, 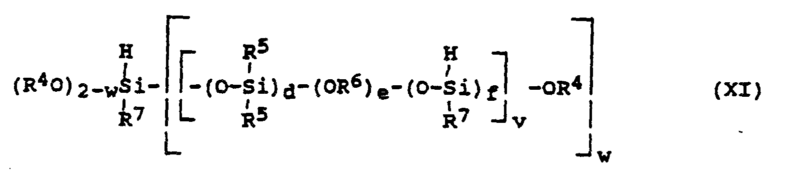 et/ou les hydrolysats partiels et/ou condensats partiels correspondants et/ou les produits de réaction de ces hydrolysats et condensats avec R²₃SiOH et/ou R²₃SiOSiR²₃, avec la condition que, par molécule de composé organosilicié, soient présents en moyenne, plus d'un radical organyloxy R⁴O-, R⁴ étant un radical hydrocarbure monovalent, facultativement substitué, et e est en moyenne supérieur à 0,
où
R⁴, R², R⁵, R⁶, R⁷, d, e, f et w ont chacun la signification donnée précédemment, et v peut être chaque fois identique ou différent et représente un nombre entier compris entre 1 et 100,
ainsi que leurs mélanges.

5. Mélanges d'organo(poly)siloxanes suivant l'une ou plusieurs des revendications 1 à 4, caractérisés en ce qu'ils peuvent être préparés, chaque fois sur base du poids total de mélange d'organo(poly)siloxanes, à partir de,
(A) 20 à 98% en poids d'α,ω-dihydroxyorgano(poly)siloxanes,
(B) 1 à 50% en poids de composé organosilicié de formule (I),
(C) 0 à 50% en poids de composé organosilicié de formule (II),
(D) 0 à 70% en poids de charge,
(E) 0 à 70% en poids de plastifiant,
(F) 0 à 20% en poids d'intermédiaire d'adhérence,
(G) 0 à 20% en poids d'éliminateur d'impuretés,
(H) 0 à 10% en poids de catalyseur de condensation, et
(K) 0 à 50% en poids d'additif,
avec la condition que, au moins l'un des composants (D), (E) et (F) soit utilisé dans le cas où le composant (B) est un silane de formule (IV).

6. Mélanges d'organo(poly)siloxanes suivant la revendication 5, caractérisés en ce que l'on utilise comme catalyseurs de condensation (H), des catalyseurs acides, exempts d'atomes métalliques.

7. Procédé de préparation de mélanges d'organo(poly)siioxanes pouvant être réticulés en élastomères avec élimination d'alcools, caractérisé en ce que l'on mélange en ordre quelconque, chaque fois sur la base du poids total du mélange d'organo(poly)siloxanes,
(A) 20 à 98% en poids d'α,ω-dihydroxy-organo(poly)siloxanes,
(B) 1 à 50% en poids de composé organosilicié de formule (I),
(C) 0 à 50% en poids de composé organosilicié de formule (II),
(D) 0 à 70% en poids de charge,
(E) 0 à 70% en poids de plastifiant,
(F) 0 à 20% en poids d'intermédiaire d'adhérence,
(G) 0 à 20% en poids d'éliminateur d'impuretés,
(H) 0 à 10% en poids de catalyseur de condensation, et
(K) 0 à 50% en poids d'additif,
avec la condition que, dans le cas où, dans la formule (I), x=0 et/ou a=b=c=0, on mélange un composé organosilicié (C) de formule générale (II) avec v différent de 0 et (d+e+f) différent de 0,
ainsi que facultativement d'autres matières, le mélange étant agité, dans une première étape, à une température de 15 à 80°C et une pression de 900 à 1100 hPa pendant une période de 5 à 90 minutes et ensuite, dans une deuxième étape, à une pression de 0,01 à 100 hPa pendant une période supplémentaire de 3 à 60 minutes, où la vitesse d'agitation est choisie de sorte que la température du mélange augmente pendant l'agitation, sans autre apport de chaleur, jusqu'à une valeur située dans l'intervalle de température de 15°C à 80°C.

8. Procédé suivant la revendication 7, caractérisé en ce que l'on utilise, sur la base du poids total du mélange d'organo(poly)siloxanes
(C) 1 à 20% en poids de composé organosilicié de formule (II).

9. Composés organosiliciés de formule 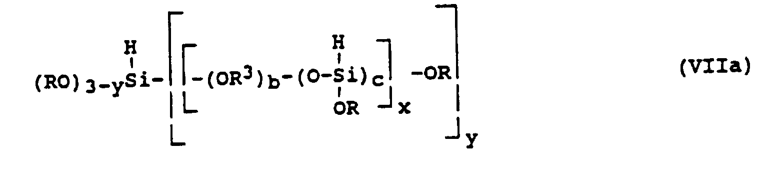 et/ou les hydrolysats partiels et/ou condensats partiels correspondants et/ou leurs cohydrolysats partiels avec (C) et/ou leurs cocondensats partiels avec (C) et/ou les produits de réaction de ces hydrolysats et condensats avec R²₃SiOH et/ou R²₃SiOSiR²₃,
où
R, R², R³, b, c et y ont chacun la signification donnée précédemment et x peut être chaque fois identique ou différent et représente un nombre entier compris entre 1 et 100,
avec la condition que par molécule de composé organosilicié, soient présents en moyenne, plus de deux radicaux organyloxy RO- et R⁴O- respectivement, R et R⁴ étant respectivemtn des radicaux hydrocarbure monovalents, facultativement substitués, et que non seulement b mais aussi c, soient en moyenne supérieurs à 0.

10. Composés organosiliciés de formule 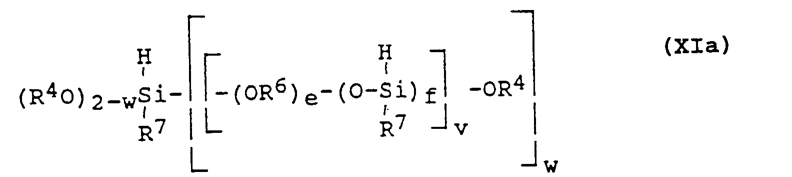 et/ou les hydrolysats partiels et/ou condensats partiels correspondants et/ou les produits de réaction de ces hydrolysats et condenstas avec R² ₃SiOH et/ou R² ₃SiOSiR² ₃, où
R⁴, R², R⁶, R⁷, e, f, et w ont chacun la signification donnée précédemment et v peut être chaque fois identique ou différent et représente un nombre entier compris entre 1 et 100,
avec la condition que, par molécule de composé organosilicié, soient présents en moyenne, plus d'un radical organyloxy R⁴O-, R⁴ étant un radical hydrocarbure monovalent, facultativement substitué, et que non seulement e mais aussi f, soient en moyenne supérieurs à 0.
